# EUROPEAN PATENT APPLICATION

(11) **EP 2 957 987 A1**
(43) Date of publication of application: **23.12.2015**
(21) Application number: 14173076.2
(22) Date of filing: 19.06.2014
(51) Int. Cl.: G06F 3/01, G06F 3/0481, G06F 3/0484

(54) **A non-depth multiple implement input and a depth multiple implement input**

(71) Applicant: Nokia Technologies OY, 02610 Espoo (FI)
(72) Inventor: Vilermo, Miikka, 37200 Siuro (FI); Lehtiniemi, Arto, 33880 Lempäälä (FI); Tammi, Mikko, 33310 Tampere (FI); Laaksonen, Lasse, 37120 Nokia (FI)
(74) Representative: Nokia Corporation

(57) **Abstract**

A method comprising causing display of a representation of a three dimensional model, receiving information indicative of a first multiple implement input that is associated with a first number of implements, determining that the first multiple implement input is a non-depth multiple implement input based on the first number of implements, determining a first width and a first height in the three dimensional model based on the non-depth multiple implement input, receiving information indicative of a second multiple implement input that is associated with a second number of implements, the second number being different from the first number, determining that the second multiple implement input is a depth multiple implement input based on the second number of implements, and determining a second width, a second height, and a second depth in the three dimensional model based on the depth multiple implement input is disclosed.

## Description

### TECHNICAL FIELD

The present application relates generally to a non-depth multiple implement input and a depth multiple implement input.

### BACKGROUND

Electronic apparatuses have becoming increasingly pervasive in our society. Additionally, electronic apparatuses have become more powerful and, thus, more capable to handle various tasks. In many circumstances, a user may utilize an electronic apparatus to view, interact with, and/or manipulate information. As such, it may be desirable to allow a user to view, interact with, and/or manipulate such information and an easy and intuitive manner.

### SUMMARY

One or more embodiments may provide an apparatus, a computer readable medium, a non-transitory computer readable medium, a computer program product, and/or a method for causing display of a representation of a three dimensional model, receiving information indicative of a first multiple implement input that is associated with a first number of implements, determining that the first multiple implement input is a non-depth multiple implement input based, at least in part, on the first number of implements, determining a first width in the three dimensional model and a first height in the three dimensional model based, at least in part, on the non-depth multiple implement input, receiving information indicative of a second multiple implement input that is associated with a second number of implements, the second number being different from the first number, determining that the second multiple implement input is a depth multiple implement input based, at least in part, on the second number of implements, and determining a second width in the three dimensional model, a second height in the three dimensional model, and a second depth in the three dimensional model based, at least in part, on the depth multiple implement input.

One or more embodiments may provide an apparatus, a computer readable medium, a computer program product, and/or a non-transitory computer readable medium having means for causing display of a representation of a three dimensional model, means for receiving information indicative of a first multiple implement input that is associated with a first number of implements, means for determining that the first multiple implement input is a non-depth multiple implement input based, at least in part, on the first number of implements, means for determining a first width in the three dimensional model and a first height in the three dimensional model based, at least in part, on the non-depth multiple implement input, means for receiving information indicative of a second multiple implement input that is associated with a second number of implements, the second number being different from the first number, means for determining that the second multiple implement input is a depth multiple implement input based, at least in part, on the second number of implements, and means for determining a second width in the three dimensional model, a second height in the three dimensional model, and a second depth in the three dimensional model based, at least in part, on the depth multiple implement input.

An apparatus comprising at least one processor and at least one memory, the memory comprising machine-readable instructions, that when executed cause the apparatus to perform causation of display of a representation of a three dimensional model, receipt of information indicative of a first multiple implement input that is associated with a first number of implements, determination that the first multiple implement input is a non-depth multiple implement input based, at least in part, on the first number of implements, determination of a first width in the three dimensional model and a first height in the three dimensional model based, at least in part, on the non-depth multiple implement input, receipt of information indicative of a second multiple implement input that is associated with a second number of implements, the second number being different from the first number, determination that the second multiple implement input is a depth multiple implement input based, at least in part, on the second number of implements, and determination of a second width in the three dimensional model, a second height in the three dimensional model, and a second depth in the three dimensional model based, at least in part, on the depth multiple implement input.

In at least one example embodiment, the representation is a two dimensional representation of the three dimensional model.

In at least one example embodiment, the representation is a three dimensional representation of the three dimensional model.

In at least one example embodiment, the three dimensional model comprises at least one of a three dimensional image, a depth map, a height map, or data structure that represents an object within three dimensional space.

In at least one example embodiment, a multiple implement input comprises an input that is associated with at least two implements.

In at least one example embodiment, a multiple implement input comprises at least one of a multiple touch input, a multiple finger gesture, or a multiple implement gesture.

In at least one example embodiment, a number of implements is indicative of at least one of a number of contact regions, a number of fingers, a number of fingertips, a number of touch instruments, or a number of stylus.

In at least one example embodiment, an implement comprises at least one of a contact region, a finger, a fingertip, a touch instrument, or a stylus.

In at least one example embodiment, the first number of implements is two implements, and the determination that the first multiple implement input is a non-depth multiple implement input is based, at least in part, on the receipt of information indicative of the first multiple implement input that is associated with two implements.

In at least one example embodiment, the two implements are two fingers.

In at least one example embodiment, the second number of implements is three implements, and the determination that the second multiple implement input is a depth multiple implement input is based, at least in part, on the receipt of information indicative of the second multiple implement input that is associated with three implements.

In at least one example embodiment, the three implements are three fingers.

One or more example embodiments further perform determining that the non-depth multiple implement input comprises a movement input that indicates a change in distance between at least two of the implements, wherein the first width and the first height are based, at least in part, on the change in the distance.

One or more example embodiments further perform determining a first positional depth in the three dimensional model to associate with the non-depth multiple implement input.

In at least one example embodiment, the determination of the first positional depth comprises identifying a first object that has a position that corresponds with a position of the non-depth multiple implement input, and determining the first positional depth to be a depth in the three dimensional model that corresponds with the first object.

One or more example embodiments further perform determining a selection region that has a position that corresponds with the first positional depth and has a selection region size that corresponds with a first volumetric width and a first volumetric height such that the first volumetric width corresponds with the first width and the first volumetric height corresponds with the first height.

In at least one example embodiment, the selection region size corresponds with a predetermined volumetric depth.

In at least one example embodiment, the predetermined volumetric depth indicates a planar selection region.

One or more example embodiments further perform selecting the first object based, at least in part, on the selection region.

One or more example embodiments further perform determining that the position of the first object corresponds with the selection region, and causing selection of the first object based, at least in part, on the position of the first object corresponding with the selection region.

One or more example embodiments further perform causing display of an object selection indicator that indicates selection of the first object based, at least in part, on the selection of the first object.

One or more example embodiments further perform causing display of a selection region indicator that indicates the selection region based, at least in part, on the determination of the selection region.

One or more example embodiments further perform determining that the non-depth multiple implement input comprises a movement input that indicates a change in distance between at least two of the implements, determining a changed first volumetric height and a changed first volumetric width based, at least in part, on the change in the distance, and determining a changed selection region such that the changed selection region remains at a position that corresponds with the first positional depth and has a changed selection region size that corresponds with the changed first volumetric height and the changed first volumetric width.

One or more example embodiments further perform causing display of a selection region indicator that indicates the changed selection region based, at least in part, on the determination of the changed selection region.

In at least one example embodiment, a volumetric depth of the selection region is independent of the movement input of the non-depth multiple implement input.

One or more example embodiments further perform avoiding change of a volumetric depth of the selection region based, at least in part, on the first multiple implement input being a non-depth multiple implement input.

One or more example embodiments further perform determining that a position of a second object corresponds with the changed selection region, and causing selection of the second object based, at least in part, on the position of the second object corresponding with the changed selection region.

One or more example embodiments further perform causing display of an object selection indicator that indicates selection of the second object based, at least in part, on the selection of the second object.

In at least one example embodiment, a positional depth of the first object in the three dimensional model corresponds with a positional depth of the second object.

In at least one example embodiment, the first positional depth corresponds with the positional depth of the second object.

One or more example embodiments further perform avoiding selection of a third object based, at least in part, on lack of correspondence between a positional depth of the third object and the changed selection region.

One or more example embodiments further perform determining that the positional depth of the third object fails to correspond with the changed selection region.

In at least one example embodiment, a difference between the positional depth of the third object and the positional depth of the first object is less than a distance between the first object and the second object on a plane that is orthogonal to a depth axis.

One or more example embodiments further perform determining that the depth multiple implement input comprises a movement input that indicates a change in distance between at least two of the implements, wherein the second height, the second width, and the second depth are based, at least in part, on the change in the distance.

One or more example embodiments further perform determining that the depth multiple implement input comprises a movement input that indicates a change in distance between at least two of the implements, wherein the second width, the second height, and the second depth are based, at least in part, on the change in the distance.

One or more example embodiments further perform determining a second positional depth in the three dimensional model to associate with the depth multiple implement input.

In at least one example embodiment, the determination of the second positional depth comprises identifying a first object that has a position that corresponds with a position of the depth multiple implement input, and determining the second positional depth to be a depth in the three dimensional model that corresponds with the first object.

One or more example embodiments further perform determining a selection region that has a position that corresponds with the second positional depth and has a selection region size that corresponds with a second volumetric width, a second volumetric height, and a second volumetric depth, such that the second volumetric width corresponds with the second width, the second volumetric height corresponds with the second height, and the second volumetric depth corresponds with the second depth.

One or more example embodiments further perform selecting the first object based, at least in part, on the selection region.

One or more example embodiments further perform determining that the position of the first object corresponds with the selection region, and causing selection of the first object based, at least in part, on the position of the first object corresponding with the selection region.

One or more example embodiments further perform determining that the depth multiple implement input comprises a movement input that indicates a change in distance between at least two of the implements, determining a changed second volumetric height, a changed second volumetric width, and a changed second volumetric depth based, at least in part, on the change in the distance, and determining a changed selection region such that the changed selection region remains at a position that corresponds with the second positional depth and has a changed selection region size that corresponds with the changed second volumetric height, the changed second volumetric width, and the changed second volumetric depth.

In at least one example embodiment, the changed second volumetric depth of the changed selection region is based, at least in part, on the movement input of the depth multiple implement input.

One or more example embodiments further perform changing of the second volumetric depth of the selection region based, at least in part, on the second multiple implement input being a depth multiple implement input.

One or more example embodiments further perform determining that a position of a second object corresponds with the changed selection region, and causing selection of the second object based, at least in part, on the position of the second object corresponding with the changed selection region.

In at least one example embodiment, a positional depth of the first object in the three dimensional model fails to correspond with a positional depth of the second object in the three dimensional model.

In at least one example embodiment, the second positional depth fails to correspond with the positional depth of the second object.

One or more example embodiments further perform designating an object comprised by the three dimensional model, wherein the first height corresponds with a volumetric height of the object in the three dimensional model and the first width corresponds with a volumetric width of the object in the three dimensional model.

In at least one example embodiment, the object has a predetermined volumetric height and a predetermined volumetric width prior to the determination of the first height and the first width, the volumetric height differs from the predetermined volumetric height, and the volumetric width differs from the predetermined volumetric width.

One or more example embodiments further perform resizing of the object such that a size of the object is characterized by the volumetric height and the volumetric width.

In at least one example embodiment, the representation of the three dimensional model comprises a representation of the object, and further comprising causing display of another representation of the three dimensional model that comprises a different representation of the object such that the different representation of the object is indicative of the volumetric height and the volumetric width.

In at least one example embodiment, the causation of display of the other representation of the three dimensional model is subsequent to the determination of the first width in the three dimensional model and the first height in the three dimensional model.

In at least one example embodiment, the object has a predetermined positional depth in the three dimensional model prior to the determination of the first height and the first width, and the object has the predetermined positional depth in the three dimensional model subsequent to the determination of the first height and the first width.

In at least one example embodiment, the first multiple implement input fails to change the predetermined position depth of the object in the three dimensional model based, at least in part, on the first multiple implement input being the non-depth multiple implement input.

In at least one example embodiment, the predetermined positional depth of the object is a positional depth of the object in the three dimensional model that is relative to an object reference point of the object.

In at least one example embodiment, the object reference point of the object is at least one of a geometric center of the object, an edge of the object, a side of the object, a portion of the object, or any other point of reference in relation to the object.

In at least one example embodiment, the object has a predetermined volumetric depth prior to the determination of the first height and the first width, and further comprising determination of a changed volumetric depth of the object based, at least in part, on the non-depth multiple implement input.

In at least one example embodiment, the changed volumetric depth of the object is based, at least in part, on the volumetric height and the volumetric width of the object.

One or more example embodiments further perform designating an object comprised by the three dimensional model, wherein the second height corresponds with a volumetric height of the object in the three dimensional model, the second width corresponds with a volumetric width of the object in the three dimensional model, and the second depth corresponds with a volumetric depth of the object in the three dimensional model.

In at least one example embodiment, the object has a predetermined volumetric height, a predetermined volumetric width, and a predetermined volumetric depth prior to the determination of the second height, the second width, and the second depth, the volumetric height differs from the predetermined volumetric height, the volumetric width differs from the predetermined volumetric width, and the volumetric depth differs from the predetermined volumetric depth.

One or more example embodiments further perform resizing of the object such that a size of the object is characterized by the volumetric height, the volumetric width, and the volumetric depth.

In at least one example embodiment, the representation of the three dimensional model comprises a representation of the object.

One or more example embodiments further perform causation of display of another representation of the three dimensional model that comprises a different representation of the object such that the different representation of the object is indicative of the volumetric height, the volumetric width, and the volumetric width.

In at least one example embodiment, the causation of display of the other representation of the three dimensional model is subsequent to the determination of the second width in the three dimensional model, the second height in the three dimensional model, and the second depth in the three dimensional model.

In at least one example embodiment, the object has a predetermined positional depth in the three dimensional model prior to the determination of the second width, the second height, and the second depth, and the object has a changed positional depth in the three dimensional model subsequent to the determination of the second width, the second height, and the second depth.

In at least one example embodiment, the second multiple implement input changes the predetermined positional depth of the object in the three dimensional model based, at least in part, on the second multiple implement input being the depth multiple implement input.

In at least one example embodiment, the changed positional depth of the object in the three dimensional model is based, at least in part, on the depth multiple implement input.

One or more example embodiments further perform determining that the depth multiple implement input comprises a movement input that indicates a change in distance between at least two of the implements, determining a changed second volumetric height, a changed second volumetric width, and a changed second volumetric depth based, at least in part, on the change in the distance, and determining another changed positional depth of the object in the three dimensional model based, at least in part, on the movement input of the depth multiple implement input.

One or more example embodiments further perform determining that the depth multiple implement input comprises a movement input that indicates a change in distance between at least two of the implements, wherein the determination of the changed second positional depth is based, at least in part, on the change in the distance.

In at least one example embodiment, the changed second volumetric height and the changed second volumetric depth are based, at least in part, on the changed second positional depth.

In at least one example embodiment, the object reference point of the object is at least one of a geometric center of the object, an edge of the object, a side of the object, a portion of the object, or any other point of reference in relation to the object.

In at least one example embodiment, the object has a predetermined volumetric depth prior to the determination of the second height, the second width, and the second depth, and further comprising determination of a changed volumetric depth of the object based, at least in part, on the depth multiple implement input.

In at least one example embodiment, the changed volumetric depth of the object is based, at least in part, on the volumetric height and the volumetric width of the object.

In at least one example embodiment, the representation of the object has a representational height, a representational width, and a representational depth prior to the determination of the second height, the second width, and the second depth.

One or more example embodiments further perform determination of a changed representational height, a changed representational width, and a changed representational depth based, at least in part, on the depth multiple implement input.

In at least one example embodiment, the different representation of the object is indicative of the changed representational height, the changed representational width, and the changed representational depth.

In at least one example embodiment, the representation of the object has a representational height in the representation of the three dimensional model and a representational width in the representation of the three dimensional model prior to the determination of the second height, the second width, and the second depth.

One or more example embodiments further perform determination of a changed representational height and a changed representational width based, at least in part, on the depth multiple implement input.

In at least one example embodiment, the different representation of the object is indicative of the changed representational height and the changed representational width.

### BRIEF DESCRIPTION OF THE DRAWINGS

For a more complete understanding of embodiments of the invention, reference is now made to the following descriptions taken in connection with the accompanying drawings in which:
FIGURE 1 is a block diagram showing an apparatus according to at least one example embodiment;
FIGURES 2A-2D are diagrams illustrating multiple implement inputs according to at least one example embodiment;
FIGURES 3A-3D are diagrams illustrating a three dimensional model, a representation of a three dimensional model, and/or a selection region according to at least one example embodiment;
FIGURES 4A-4B are diagrams illustrating a selection region in relation to a three dimensional model according to at least one example embodiment;
FIGURE 5 is a flow diagram illustrating activities associated with receipt of a multiple implement input that is associated with a number of implements according to at least one example embodiment;
FIGURE 6 is a flow diagram illustrating activities associated with determination of a selection region according to at least one example embodiment;
FIGURE 7 is a flow diagram illustrating activities associated with selection of an object according to at least one example embodiment;
FIGURES 8A-8D are diagrams illustrating a three dimensional model and/or a representation of a three dimensional model according to at least one example embodiment;
FIGURES 9A-9B are diagrams illustrating a three dimensional model and/or a representation of a three dimensional model according to at least one example embodiment;
FIGURE 10 is a flow diagram illustrating activities associated with resizing of an object according to at least one example embodiment; and
FIGURE 11 is a flow diagram illustrating activities associated with determination of a width, a height, and/or a depth in a three dimensional model according to at least one example embodiment.

### DETAILED DESCRIPTION OF THE DRAWINGS

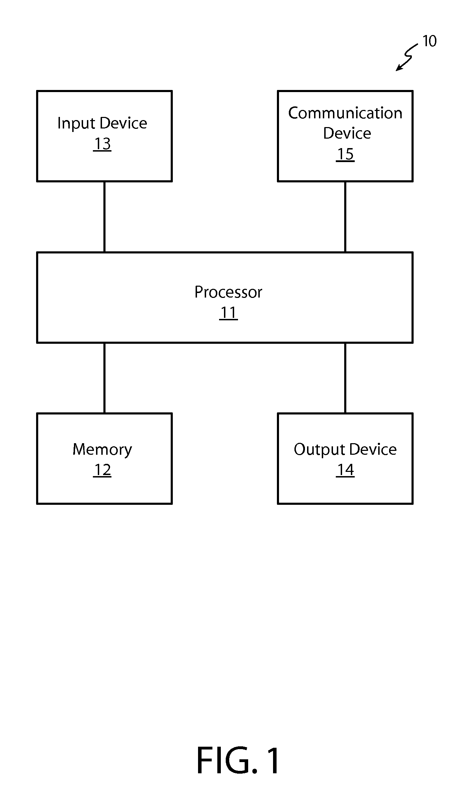

An embodiment of the invention and its potential advantages are understood by referring to FIGURES 1 through 11 of the drawings.

Some embodiments will now be described more fully hereinafter with reference to the accompanying drawings, in which some, but not all, embodiments are shown. Various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the spirit and scope of embodiments of the present invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network apparatus, other network apparatus, and/or other computing apparatus.

As defined herein, a "non-transitory computer-readable medium," which refers to a physical medium (e.g., volatile or non-volatile memory device), can be differentiated from a "transitory computer-readable medium," which refers to an electromagnetic signal.

FIGURE 1 is a block diagram showing an apparatus, such as an electronic apparatus 10, according to at least one example embodiment. It should be understood, however, that an electronic apparatus as illustrated and hereinafter described is merely illustrative of an electronic apparatus that could benefit from embodiments of the invention and, therefore, should not be taken to limit the scope of the invention. While electronic apparatus 10 is illustrated and will be hereinafter described for purposes of example, other types of electronic apparatuses may readily employ embodiments of the invention. Electronic apparatus 10 may be a personal digital assistant (PDAs), a pager, a mobile computer, a desktop computer, a television, a gaming apparatus, a laptop computer, a tablet computer, a media player, a camera, a video recorder, a mobile phone, a global positioning system (GPS) apparatus, an automobile, a kiosk, an electronic table, and/or any other types of electronic systems. Moreover, the apparatus of at least one example embodiment need not be the entire electronic apparatus, but may be a component or group of components of the electronic apparatus in other example embodiments. For example, the apparatus may be an integrated circuit, a set of integrated circuits, and/or the like.

Furthermore, apparatuses may readily employ embodiments of the invention regardless of their intent to provide mobility. In this regard, even though embodiments of the invention may be described in conjunction with mobile applications, it should be understood that embodiments of the invention may be utilized in conjunction with a variety of other applications, both in the mobile communications industries and outside of the mobile communications industries. For example, the apparatus may be, at least part of, a non-carryable apparatus, such as a large screen television, an electronic table, a kiosk, an automobile, and/or the like.

In at least one example embodiment, electronic apparatus 10 comprises processor 11 and memory 12. Processor 11 may be any type of processor, controller, embedded controller, processor core, and/or the like. In at least one example embodiment, processor 11 utilizes computer program code to cause an apparatus to perform one or more actions. Memory 12 may comprise volatile memory, such as volatile Random Access Memory (RAM) including a cache area for the temporary storage of data and/or other memory, for example, non-volatile memory, which may be embedded and/or may be removable. The non-volatile memory may comprise an EEPROM, flash memory and/or the like. Memory 12 may store any of a number of pieces of information, and data. The information and data may be used by the electronic apparatus 10 to implement one or more functions of the electronic apparatus 10, such as the functions described herein. In at least one example embodiment, memory 12 includes computer program code such that the memory and the computer program code are configured to, working with the processor, cause the apparatus to perform one or more actions described herein.

The electronic apparatus 10 may further comprise a communication device 15. In at least one example embodiment, communication device 15 comprises an antenna, (or multiple antennae), a wired connector, and/or the like in operable communication with a transmitter and/or a receiver. In at least one example embodiment, processor 11 provides signals to a transmitter and/or receives signals from a receiver. The signals may comprise signaling information in accordance with a communications interface standard, user speech, received data, user generated data, and/or the like. Communication device 15 may operate with one or more air interface standards, communication protocols, modulation types, and access types. By way of illustration, the electronic communication device 15 may operate in accordance with second-generation (2G) wireless communication protocols IS-136 (time division multiple access (TDMA)), Global System for Mobile communications (GSM), and IS-95 (code division multiple access (CDMA)), with third-generation (3G) wireless communication protocols, such as Universal Mobile Telecommunications System (UMTS), CDMA2000, wideband CDMA (WCDMA) and time division-synchronous CDMA (TD-SCDMA), and/or with fourth-generation (4G) wireless communication protocols, wireless networking protocols, such as 802.11, short-range wireless protocols, such as Bluetooth, and/or the like. Communication device 15 may operate in accordance with wireline protocols, such as Ethernet, digital subscriber line (DSL), asynchronous transfer mode (ATM), and/or the like.

Processor 11 may comprise means, such as circuitry, for implementing audio, video, communication, navigation, logic functions, and/or the like, as well as for implementing embodiments of the invention including, for example, one or more of the functions described herein. For example, processor 11 may comprise means, such as a digital signal processor device, a microprocessor device, various analog to digital converters, digital to analog converters, processing circuitry and other support circuits, for performing various functions including, for example, one or more of the functions described herein. The apparatus may perform control and signal processing functions of the electronic apparatus 10 among these devices according to their respective capabilities. The processor 11 thus may comprise the functionality to encode and interleave message and data prior to modulation and transmission. The processor 1 may additionally comprise an internal voice coder, and may comprise an internal data modem. Further, the processor 11 may comprise functionality to operate one or more software programs, which may be stored in memory and which may, among other things, cause the processor 11 to implement at least one embodiment including, for example, one or more of the functions described herein. For example, the processor 11 may operate a connectivity program, such as a conventional internet browser. The connectivity program may allow the electronic apparatus 10 to transmit and receive internet content, such as location-based content and/or other web page content, according to a Transmission Control Protocol (TCP), Internet Protocol (IP), User Datagram Protocol (UDP), Internet Message Access Protocol (IMAP), Post Office Protocol (POP), Simple Mail Transfer Protocol (SMTP), Wireless Application Protocol (WAP), Hypertext Transfer Protocol (HTTP), and/or the like, for example.

The electronic apparatus 10 may comprise a user interface for providing output and/or receiving input. The electronic apparatus 10 may comprise an output device 14. Output device 14 may comprise an audio output device, such as a ringer, an earphone, a speaker, and/or the like. Output device 14 may comprise a tactile output device, such as a vibration transducer, an electronically deformable surface, an electronically deformable structure, and/or the like. Output device 14 may comprise a visual output device, such as a display, a light, and/or the like. In at least one example embodiment, the apparatus causes display of information, the causation of display may comprise displaying the information on a display comprised by the apparatus, sending the information to a separate apparatus that comprises a display, and/or the like. The electronic apparatus may comprise an input device 13. Input device 13 may comprise a light sensor, a proximity sensor, a microphone, a touch sensor, a force sensor, a button, a keypad, a motion sensor, a magnetic field sensor, a camera, and/or the like. A touch sensor and a display may be characterized as a touch display. In an embodiment comprising a touch display, the touch display may be configured to receive input from a single point of contact, multiple points of contact, and/or the like. In such an embodiment, the touch display and/or the processor may determine input based, at least in part, on position, motion, speed, contact area, and/or the like. In at least one example embodiment, the apparatus receives an indication of an input. The apparatus may receive the indication from a sensor, a driver, a separate apparatus, and/or the like. The information indicative of the input may comprise information that conveys information indicative of the input, indicative of an aspect of the input indicative of occurrence of the input, and/or the like.

The electronic apparatus 10 may include any of a variety of touch displays including those that are configured to enable touch recognition by any of resistive, capacitive, infrared, strain gauge, surface wave, optical imaging, dispersive signal technology, acoustic pulse recognition or other techniques, and to then provide signals indicative of the location and other parameters associated with the touch. Additionally, the touch display may be configured to receive an indication of an input in the form of a touch event which may be defined as an actual physical contact between a selection object (e.g., a finger, stylus, pen, pencil, or other pointing device) and the touch display. Alternatively, a touch event may be defined as bringing the selection object in proximity to the touch display, hovering over a displayed object or approaching an object within a predefined distance, even though physical contact is not made with the touch display. As such, a touch input may comprise any input that is detected by a touch display including touch events that involve actual physical contact and touch events that do not involve physical contact but that are otherwise detected by the touch display, such as a result of the proximity of the selection object to the touch display. A touch display may be capable of receiving information associated with force applied to the touch screen in relation to the touch input. For example, the touch screen may differentiate between a heavy press touch input and a light press touch input. In at least one example embodiment, a display may display two-dimensional information, three-dimensional information and/or the like.

In embodiments including a keypad, the keypad may comprise numeric (for example, 0-9) keys, symbol keys (for example, #, *), alphabetic keys, and/or the like for operating the electronic apparatus 10. For example, the keypad may comprise a conventional QWERTY keypad arrangement. The keypad may also comprise various soft keys with associated functions. In addition, or alternatively, the electronic apparatus 10 may comprise an interface device such as a joystick or other user input interface.

Input device 13 may comprise a media capturing element. The media capturing element may be any means for capturing an image, video, and/or audio for storage, display or transmission. For example, in at least one example embodiment in which the media capturing element is a camera module, the camera module may comprise a digital camera which may form a digital image file from a captured image. As such, the camera module may comprise hardware, such as a lens or other optical component(s), and/or software necessary for creating a digital image file from a captured image. Alternatively, the camera module may comprise only the hardware for viewing an image, while a memory device of the electronic apparatus 10 stores instructions for execution by the processor 11 in the form of software for creating a digital image file from a captured image. In at least one example embodiment, the camera module may further comprise a processing element such as a co-processor that assists the processor 11 in processing image data and an encoder and/or decoder for compressing and/or decompressing image data. The encoder and/or decoder may encode and/or decode according to a standard format, for example, a Joint Photographic Experts Group (JPEG) standard format.

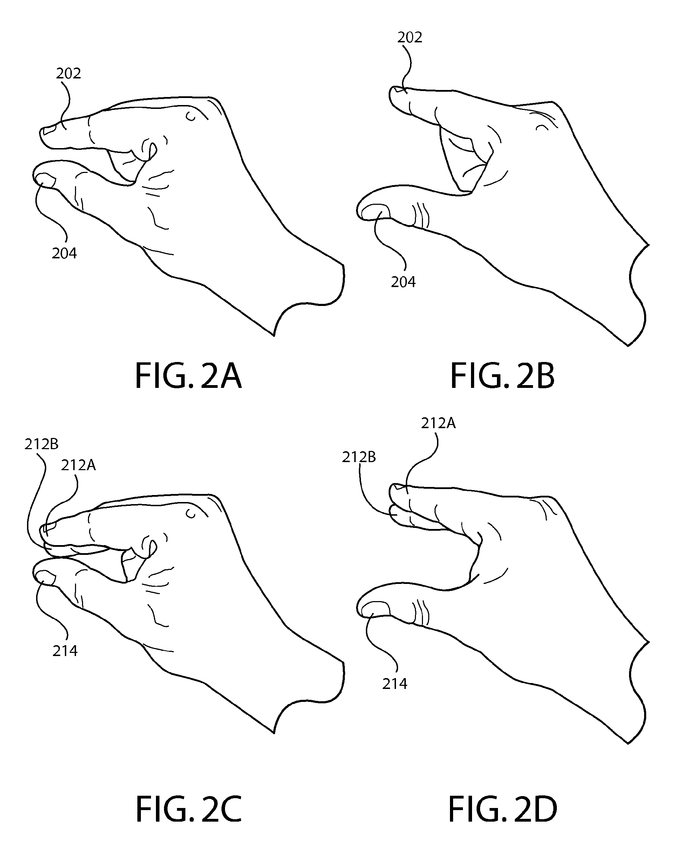

FIGURES 2A-2D are diagrams illustrating multiple implement inputs according to at least one example embodiment. The examples of FIGURES 2A-2D are merely examples and do not limit the scope of the claims. For example, multiple implement input may vary, number of implements may vary, type of implements may vary, implement configuration may vary, implement arrangement may vary, and/or the like.

In many circumstances, a user of an apparatus may desire to interact with the user's apparatus. For example, the user may desire to interact with information by way of the apparatus, to manipulate data that is displayed on a display of the apparatus, and/or the like. As such, it may be desirable to configure an apparatus such that a user of the apparatus may interact with the apparatus in an easy and intuitive manner.

Many users may be familiar with certain types of inputs, gestures, such as motion gestures, hover gestures, touch gestures, and/or the like. For example, a user may be accustomed to different types of touch gestures, such as a pinch input, a swipe gesture, a drag input, and/or the like. As such, it may be desirable to permit a user to utilize such inputs and/or gestures in interacting with an apparatus. In at least one example embodiment, an apparatus receives information indicative of a multiple implement input. In such an example embodiment, the multiple implement input maybe associated with a number of implements. The multiple implement input may comprise a multiple touch input, a multiple finger gesture, a multiple implement gesture, and/or the like. In at least one example embodiment, the multiple implement input is an input that is associated with at least two implements. For example, the implement may comprise at least one of a contact region, a finger, a fingertip, a touch instrument, a stylus, and/or the like. In such an example, the number of implements may be indicative of a number of contact regions, a number of fingers, a number of fingertips, a number of touch instruments, a number of stylus, and/or the like.

In many circumstances, it may be desirable to permit a user to interact with an apparatus in various manners. In at least one example embodiment, a multiple implement input is at least one of a touch input or a gesture. For example, the user may interact with the apparatus via a multiple implement input by way of a touch display. In another example, the user may perform the multiple implement input in a region that is proximate to the apparatus. In such an example, the multiple implement input may be a gesture that is received by the apparatus by way of a proximity sensor, a light sensor, a depth sensor, a camera module, and/or the like.

FIGURE 2A is a diagram illustrating a multiple implement input according to at least one example embodiment. The example of FIGURE 2A depicts a hand of a user. In the example of FIGURE 2A, implement 202 and implement 204 are two fingers of the user. Although the example of FIGURE 2A depicts utilization of a pointer finger and a thumb, either implement may be a different finger, a fingertip, a touch instrument, a stylus, and/or the like. As can be seen in the example of FIGURE 2A, implement 202 is proximate to implement 204. In at least one example embodiment, an implement that is within a proximity threshold from another implement is determined to be proximate to the other implement. For example, the proximity threshold may indicate that the implement is adjacent to the other implement, that the implement is touching the other implement, that the input associated with the implement is within a predetermined distance from the input associated with the other implement, and/or the like.

FIGURE 2B is a diagram illustrating a multiple implement input according to at least one example embodiment. The hand depicted in the example of FIGURE 2B corresponds with the hand depicted in the example of FIGURE 2A. In the example of FIGURE 2B, implement 202 and implement 204 are two fingers of the user. Although the example of FIGURE 2B depicts utilization of a pointer finger and a thumb, either implement may be a different finger, a fingertip, a touch instrument, a stylus, and/or the like. As can be seen in the example of FIGURE 2B, in comparison with the example of FIGURE 2A, implement 202 is further from implement 204.

As discussed previously, it may be desirable to allow a user to interact with an apparatus in an easy and intuitive manner. In at least one example embodiment, a multiple implement input comprises a pinch input. The pinch input may be an inward pinch input, an outward pinch input, and/or the like. The inward pinch input may be an input that is characterized by an implement associated with the input moving closer to another implement associated with the input. For example, an inward pinch input may be characterized by the movement of implement 202 and implement 204 from the configuration of FIGURE 2B to the configuration of FIGURE 2A. As can be seen in the progression from FIGURE 2B to FIGURE 2A, implement 202 moves in an inward direction, and closer to implement 204. The outward pinch input may be an input that is characterized by an implement associated with the input moving further from another implement associated with the input. For example, an outward pinch input may be characterized by the movement of implement 202 and implement 204 from the configuration of FIGURE 2A to the configuration of FIGURE 2B. As can be seen in the progression from FIGURE 2A to FIGURE 2B, implement 202 moves in an outward direction, and further from implement 204.

In some circumstances, a user may desire to utilize similar inputs and/or gestures in conjunction with indicating the user's desire to cause an apparatus to perform similar tasks, operations, and/or the like. In such circumstances, it may be desirable to configure an apparatus such that the apparatus may distinguish between two or more similar inputs and/or gestures. For example, a multiple implement input that is associated with a number of implements may invoke an action, and another multiple implement input that is associated with a different number of implement may invoke another action. As such, it may be desirable to configure an apparatus such that the apparatus may receive information indicative of a multiple implement input that is associated with a number of implements. In such an example, it may be desirable to configure the apparatus such that the apparatus may determine a particular action based, at least in part, on the number of implements that is associated with the multiple implement input.

FIGURE 2C is a diagram illustrating a multiple implement input according to at least one example embodiment. The example of FIGURE 2C depicts a hand of a user. In the example of FIGURE 2C, implement 212A, implement 212B, and implement 214 are three fingers of the user. Although the example of FIGURE 2C depicts utilization of a pointer finger, a middle finger, and a thumb, any of the implements may be a different finger, a fingertip, a touch instrument, a stylus, and/or the like. As can be seen in the example of FIGURE 2C, the pair of implements 212A and 212B is proximate to implement 214.

FIGURE 2D is a diagram illustrating a multiple implement input according to at least one example embodiment. The hand depicted in the example of FIGURE 2D corresponds with the hand depicted in the example of FIGURE 2C. In the example of FIGURE 2D, implement 212A, implement 212B, and implement 214 are three fingers of the user. Although the example of FIGURE 2D depicts utilization of a pointer finger, a middle finger, and a thumb, any of the implements may be a different finger, a fingertip, a touch instrument, a stylus, and/or the like. As can be seen in the example of FIGURE 2D, in comparison with the example of FIGURE 2C, the pair of implements 212A and 212B is further from implement 214.

As discussed previously, it may be desirable to allow a user to interact with an apparatus by way of a multiple implement input. The multiple implement input may be an outward pinch input, an inward pinch input, and/or the like. The inward pinch input may be an input that is characterized by an implement that is associated with the input moving closer to at least one other implement that is associated with the input. For example, an inward pinch input may be characterized by the movement of implement 212A, implement 212B, and implement 214 from the configuration of FIGURE 2D to the configuration of FIGURE 2C. As can be seen in the progression from FIGURE 2D to FIGURE 2C, implements 212A and 212B move in an inward direction, closer to implement 214. The outward pinch input may be an input that is characterized by an implement that is associated with the input moving further from at least another implement that is also associated with the input. For example, an outward pinch input may be characterized by the movement of implement 212A, implement 212B, and implement 214 from the configuration of FIGURE 2C to the configuration of FIGURE 2D. As can be seen in the progression from FIGURE 2C to FIGURE 2D, implements 212A and 212B move in an outward direction, further from implement 214.

As can be seen, FIGURE 2A and FIGURE 2B illustrate a multiple implement input that is associated a number of implements (two implements), implement 202 and implement 204. FIGURE 2C and FIGURE 2D illustrate another multiple implement input that is associated with a different number of implements (three implements), implement 212A, implement 212B, and implement 214. As such, a user may perform a multiple implement input that is associated with a number of implements in order to indicate a desire to cause performance of a certain operation, may perform another multiple implement input that is associated with a different number of implements in order to indicate a desire to cause performance of a different operation, and/or the like. In this manner, the apparatus may be configured to differentiate between a multiple implement input and another multiple implement input based, at least in part, on a number of implements associated with the multiple implement input and the other multiple implement input. In at least one example embodiment, a number of implements associated with a multiple implement input refers to a number of implements involved in performance of the multiple implement input, a number of implements detected to be involved in performance of the multiple implement input, and/or the like.

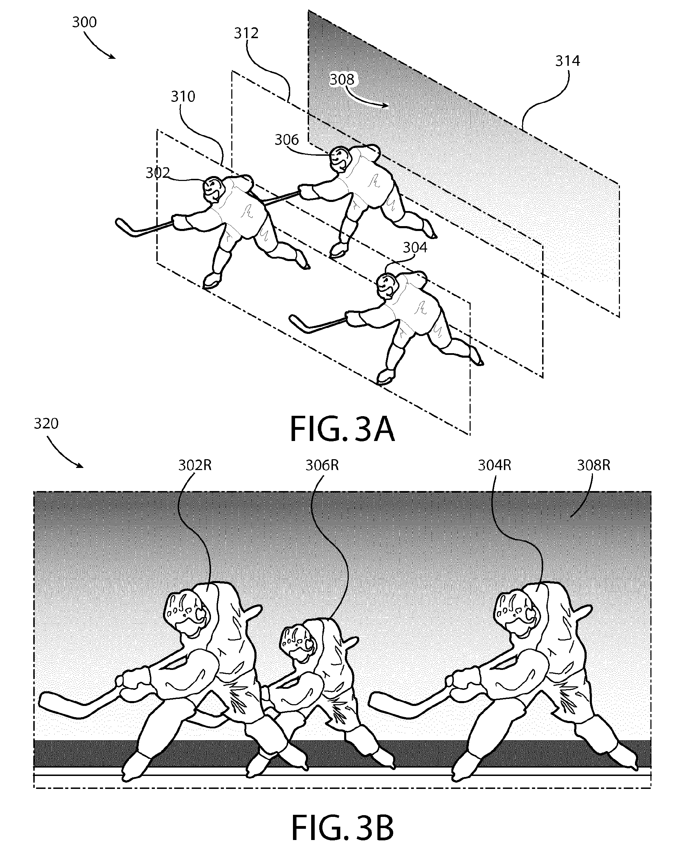

FIGURES 3A-3D are diagrams illustrating a three dimensional model, a representation of a three dimensional model, and/or a selection region according to at least one example embodiment. The examples of FIGURES 3A-3D are merely examples and do not limit the scope of the claims. For example, three dimensional model configuration may vary, representations may vary, three dimensional model composition may vary, selection region configuration may vary, and/or the like.

In many circumstances, a user may utilize an electronic apparatus to display information, interact with information, manipulate information, and/or the like. Such information may be textual information, numerical information, graphical information, and/or the like. As electronic apparatuses have become increasingly powerful, users have become accustomed to utilizing their electronic apparatuses a variety of manners. For example, many users utilize their electronic apparatuses to view graphical information, interact with three dimensional data, and/or the like. As such, it may be desirable to configure an electronic apparatus such that a user of the electronic apparatus may interact with information presented by the electronic apparatus in an easy and intuitive manner.

In some circumstances, a user many desire to interact with and/or manipulate a three dimensional model by way of an electronic apparatus. For example, the user may capture a three dimensional image by way of a camera module, may download a three dimensional model, may receive a three dimensional model, for example, by email and/or multimedia message, and/or the like. In order to facilitate user interaction with such a three dimensional model, it may be desirable to configure an electronic apparatus such that the electronic apparatus may display the three dimensional model, a representation of the three dimensional model, and/or the like. In at least one example embodiment, an apparatus causes display of a representation of a three dimensional model. In such an example embodiment, the apparatus may display the representation of the three dimensional model on a display that is comprised by the apparatus, may display the representation of the three dimensional model on a display that is operatively connected with the apparatus, may send information indicative of the three dimensional model to a separate apparatus such that the separate apparatus causes display of the representation of the three dimensional model, and/or the like. The three dimensional model may be a three dimensional image, a depth map, a height map, data structure that represents an object within three dimensional space, and/or the like. The representation of the three dimensional model may be a two dimensional representation of the three dimensional model, a three dimensional representation of the three dimensional model, and/or the like. For example, the representation of the three dimensional model may be a two dimensional representation that represents the three dimensional model from a certain perspective, from a particular vantage point, and/or the like. In another example, the representation of the three dimensional model may be a three dimensional representation that represents the three dimensional model from a certain perspective, from a particular vantage point, and/or the like.

In at least one example embodiment, a three dimensional model is characterized by a volumetric height, a volumetric width, and a volumetric depth. In such an example embodiment, the three dimensional model indicates a region of three dimensional space that conforms to the volumetric height, the volumetric width, and the volumetric depth. In such an example embodiment, the three dimensional model may comprise an object. For example, the object may be a two dimensional object that is characterized by a volumetric height and a volumetric width. In another example, the object may be a three dimensional object that is characterized by a volumetric height, a volumetric width, and a volumetric depth. In such an example embodiment, the three dimensional model may be configured such that the object is located at a particular position within the three dimensional model. For example, the object may be located at a position that is characterized by a positional height, a positional width, and a positional depth within the three dimensional model. In such an example, the position of the object within the three dimensional model may be characterized in relation a three dimensional model reference point, an object reference point, and/or the like. For example, the three dimensional model reference point may be a corner of the three dimensional model, a geometric center of the three dimensional model, an edge of the three dimensional model, any other point of reference that is associated with the three dimensional model, and/or the like. The object reference point may be a geometric center of the object, an edge of the object, a side of the object, a portion of the object, any other point of reference that is associated with the object, and/or the like.

Similarly, a representation of a three dimensional model may comprise a representation of an object that is comprised by the three dimensional model. In such an example, the representation of the object may be characterized by a representational height, a representational width, a representational depth, and/or the like. In this manner, the representational dimensions of the object may differ from the volumetric dimensions of the object. For example, the representational dimensions of the object may be based, at least in part, on the position of the object within the three dimensional model. In such an example, an object that is nearer to a front of the three dimensional model may be associated with representational dimensions that are greater than representational dimensions of a different object that is further from the front of the three dimensional model. In this manner, the representational dimensions of a representation of an object may by indicative of a positional depth of the object in the three dimensional model. As there are many manners in which to determine a representation of a three dimensional object and/or a three dimensional model, and many more manners will likely be developed in the future, the manner in which a representation of a three dimensional object and/or a three dimensional model is determined does not necessarily limit the scope of the claims.

FIGURE 3A is a diagram illustrating a three dimensional model according to at least one example embodiment. The example of FIGURE 3A depicts three dimensional model 300. Three dimensional model 300 comprises object 302, object 304, object 306, and background 308. As can be seen, objects 302, 304, and 306 are located at various positions within three dimensional model 300. For example, objects 302 and 304 are positioned at positional depth 310 within three dimensional model 300, and object 306 is positioned at positional depth 312 within three dimensional model 300. In the example of FIGURE 3A, background 308 is positioned behind objects 302, 304, and 306, at positional depth 314 within three dimensional model 300.

FIGURE 3B is a diagram illustrating a representation of a three dimensional model according to at least one example embodiment. The example of FIGURE 3B depicts representation 320. Representation 320 is a representation of three dimensional model 300 of FIGURE 3A. As can be seen, representation 320 comprises representations 302R, 304R, 306R, and 308R, which represent objects 302, 304, and 306, and background 308, of FIGURE 3A, respectively. As can be seen in the example of FIGURE 3A, objects 302, 304, and 306 are hockey players. In the example of FIGURE 3A, objects 302, 304, and 306 are characterized by a common volumetric height, volumetric width, and volumetric depth. As depicted in the example of FIGURE 3B, representations 302R and 304R are larger than representation 306R, despite objects 302, 304, and 306 of FIGURE 3A being equally dimensioned in the three dimensional model. In the example of FIGURE 3B, representations 302R and 304R appear larger based, at least in part, on objects 302 and 304 being positioned in front of object 306 within three dimensional model 300 of FIGURE 3A. As such, representations 302R and 304R are characterized by a representational height, a representational width, and/or a representational depth that are larger than one or more of the representational dimensions that characterize representation 306R.

In many circumstances, a user that is viewing a representation of a three dimensional model may desire to interact with the three dimensional model, manipulate the three dimensional model, and/or the like, by way of the representation of the three dimensional model. For example, a three dimensional model may comprise one or more objects. In such an example, the user may desire to interact with one or more of the objects, and may indicate such a desire by way of a multiple implement input that corresponds with a specific interaction, a particular operation, and/or the like. For example, the user may desire to interact with and/or manipulate a certain object within a three dimensional model, a certain subset of objects within the three dimensional model, and/or the like. In such circumstances, the user may indicate a desire to select one or more objects comprised by the three dimensional model by way of a multiple implement input.

In such circumstances, interaction with a particular object or subset of objects may be complicated by the three dimensional nature of the three dimensional model. For example, certain input methods commonly utilized in conjunction with interacting with objects comprised in a two dimensional model may fail to provide the level of control necessitated by interacting with objects in a three dimensional model. For example, many interactions associated with objects in a two dimensional model may fail to indicate a particular depth. In such an example, objects in a two dimensional model may necessarily be at a common depth of zero. Conversely, for example, many interactions associated with objects in a three dimensional model may be facilitated by an indication of a particular depth. In such an example, as a three dimensional model may comprise objects at various positional depths within the three dimensional model, it may be desirable to allow a user to interact with a three dimensional model in a manner which indicates a desire to interact with the model at a certain positional depth within the model, within a range of positional depths within the model, and/or the like.

In at least one example embodiment, an apparatus receives information indicative of a multiple implement input. In such an example embodiment, the multiple implement input may be associated with a number of implements. The number of implements that are associated with the multiple implement input may indicate a desire to invoke a certain operation, a desire to perform a particular interaction, and/or the like. For example, the number of implements may indicate a desire to interact with a particular portion of the three dimensional model, to interact with objects that are positioned at a particular positional depth within the three dimensional model, and/or the like. In at least one example embodiment, an apparatus determines that a multiple implement input is a non-depth multiple implement input based, at least in part, on a number of implements associated with the multiple implement input. For example, the number of implements may be two implements, and the determination that the multiple implement input is a non-depth multiple implement input is based, at least in part, on the receipt of information indicative of the multiple implement input that is associated with two implements, on the number of implements being two implements, and/or the like. In such an example, the two implements may be two fingers, similar as described regarding FIGURE 2A and FIGURE 2B. In another example, the number of implements may be above a predefined number of implements threshold, below a predefined number of implements threshold, and/or the like, and the determination that the multiple implement input is a non-depth multiple implement input is based, at least in part, on the receipt of information indicative of the multiple implement input that is associated with a number of implements that exceeds the predefined number of implements threshold, fails to exceed the predefined number of implements threshold, and/or the like. In at least one example embodiment, an apparatus determines that a multiple implement input is a non-depth multiple implement input based, at least in part, on an increase in a number of implements associated with the multiple implement input, a decrease in a number of implements associated with the multiple implement input, and/or the like.

In at least one example embodiment, an apparatus determines a width in the three dimensional model and a height in the three dimensional model. The determination of the width and the height may be based, at least in part, on the non-depth multiple implement input. For example, as depicted in the example of FIGURE 2A, the width and the height may be based, at least in part, on a distance between implements 202 and 204. In such an example, the distance between implements 202 and 204 may be represented as a horizontal distance and a vertical distance, corresponding with the width and the height, respectively. In at least one example embodiment, the non-depth multiple implement input comprises a movement input. The movement input may indicate a change in distance between at least two implements that are associated with the non-depth multiple implement input. In such an example embodiment, the apparatus may determine that the non-depth multiple implement input comprises a movement input that indicates a change in distance between at least two of the implements, and determine the width and the height based, at least in part, on the change in the distance.

As discussed previously, when interacting with a three dimensional model, a user may desire to interact with the three dimensional model at a certain positional depth within the three dimensional model, may desire to interact with an object that is positioned at a particular positional depth within the three dimensional model, and/or the like. As such, it may be desirable to configure an apparatus such that the apparatus may determine a positional depth within the three dimensional model based, at least in part, on the user interacting with the three dimensional model by way of a non-depth multiple implement input. In at least one example embodiment, an apparatus determines a positional depth in the three dimensional model to associate with a non-depth multiple implement input. In such an example embodiment, the determination of the positional depth may comprise identification of an object that has a position that corresponds with a position of the non-depth multiple implement input, and determination of the positional depth to be a depth in the three dimensional model that corresponds with the object. In such an example embodiment, the position of the object corresponds with the position of the non-depth multiple implement input if the position of the non-depth multiple implement input is at a position that corresponds with a display position of the object, if the non-depth multiple implement input intersects a geometric normal of the object, and/or the like. In such an example embodiment, the positional depth may be determined to be a depth in the three dimensional model that is the depth of the object in the three dimensional model. For example, as depicted in the examples of FIGURE 3A and FIGURE 3B, a user may indicate a desire to interact with object 302 by way of performance of a non-depth multiple implement input at a position that corresponds with representation 302R. In such an example, receipt of the non-depth multiple implement input at the position that corresponds with representation 302R of FIGURE 3B may indicate a desire to interact with three dimensional model 300 of FIGURE 3A at a positional depth that corresponds with object 302 of FIGURE 3A, specifically, at positional depth 310 within three dimensional model 300.

As discussed previously, in many circumstances, a user may indicate a desire to select one or more objects comprised by a three dimensional model by way of a multiple implement input. In such circumstances, the user may indicate a desire to select one or more objects that are positioned at a particular positional depth within the three dimensional model by way of performance of a non-depth multiple implement input. For example, the apparatus may receive information indicative of a multiple implement input, determine that the multiple implement input is a non-depth multiple implement input, and determine a height, a width, and a positional depth within the three dimensional model based, at least in part, on the non-depth multiple implement input. In at least one example embodiment, an apparatus determines a selection region that has a position that corresponds with the positional depth of the non-depth multiple implement input. In such an example embodiment, the correspondence of the position of the selection region and the positional depth of the non-depth multiple implement input may indicate that a positional depth of the selection region is equal to the positional depth of the non-depth multiple implement input. In such an example embodiment, the selection region may have a selection region size that corresponds with a volumetric width and a volumetric height, such that the volumetric width corresponds with the width and the volumetric height corresponds with the height. In such an example embodiment, the selection region size may correspond with a predetermined volumetric depth. For example, the predetermined volumetric depth may indicate a planar selection region based, at least in part, on the multiple implement input being a non-depth multiple implement input.

In order to facilitate accurate selection of objects within the three dimensional model, it may be desirable to provide a user with feedback that is indicative of a selection region, a selection region size, and/or the like. In at least one example embodiment, an apparatus causes display of a selection region indicator that indicates the selection region. The causation of display of the selection region indicator may be based, at least in part, on the determination of the selection region, the determination of the height and the width, and/or the like. The selection region indicator may be displayed in relation to a three dimensional model, a representation of a three dimensional model, and/or the like, such that the selection region indicator indicates a location of the selection region, a selection region size of the selection region, and/or the like. For example, the selection region indicator may indicate a particular selection region by way of outlining the selection region in a dashed line, displaying of a highlighted graphic that indicates the selection region in relation to the representation of the three dimensional model, and/or the like.

In order to facilitate interaction with a particular object subsequent to indication of a desire to select the object by way of a selection region, it may be desirable to configure an apparatus such that the apparatus causes selection of one or more objects that correspond with the indicated selection region. In at least one example embodiment, an apparatus causes selection of an object. In such an example, the apparatus may select the object based, at least in part, on a selection region. For example, the apparatus may determine that a position of the object corresponds with the selection region, and cause selection of the object based, at least in part, on the position of the object corresponding with the selection region.

In order to facilitate accurate selection of objects within the three dimensional model, it may be desirable to provide a user with feedback that is indicative of a selection of a particular object, selection of a particular subset of objects, and/or the like. In at least one example embodiment, an apparatus causes display of an object selection indicator that indicates selection of an object. The causation of display of the object selection indicator may be based, at least in part, on the selection of the object. The object selection indicator may be displayed in relation to the selected object, a representation of the selected object, and/or the like, such that the object selection indicator indicates the selection of the object in the three dimensional model, the selection of the object in the representation of the three dimensional model, and/or the like. For example, the object selection indicator may indicate selection of a particular object by way of surrounding the object in a dashed outline, surrounding the representation of the object in a dashed outline, highlighting the selected object, shading the representation of the selected object in a distinctive color, and/or the like.

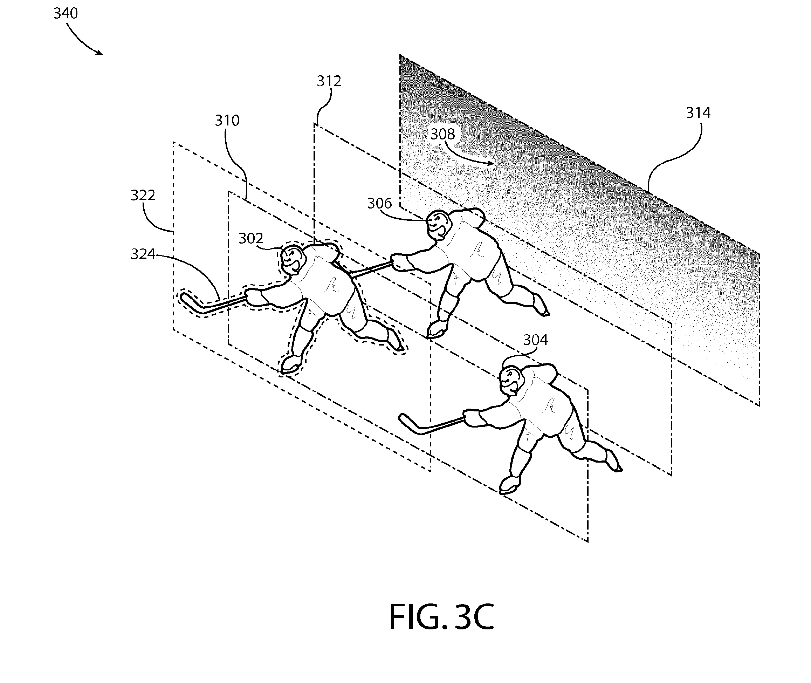

FIGURE 3C is a diagram illustrating a selection region in relation to a three dimensional model according to at least one example embodiment. The example of FIGURE 3C depicts three dimensional model 340. Three dimensional model 340 corresponds with three dimensional model 300 of FIGURE 3A. As such, three dimensional model 340 comprises object 302, object 304, object 306, and background 308. As can be seen, objects 302, 304, and 306 are located at various positions within three dimensional model 340. For example, objects 302 and 304 are positioned at positional depth 310 within three dimensional model 340, and object 306 is positioned at positional depth 312 within three dimensional model 340. In the example of FIGURE 3C, background 308 is positioned behind objects 302, 304, and 306, at positional depth 314 within three dimensional model 340.

In the example of FIGURE 3C, a user may desire to select object 302, and may indicate such a desire by way of a non-depth multiple implement input at a position that corresponds with object 302. In this manner, the user may indicate a desire to select one or more objects that are positioned within three dimensional model 340 at a positional depth that corresponds with object 302, namely, at positional depth 310. In the example of FIGURE 3C, a selection region 322 is indicated by a selection region indicator that outlines selection region 322 in a dashed line. As can be seen, selection region 322 is a planar selection region. The apparatus determined the selection region to be a planar selection region with a nominal volumetric depth based, at least in part, on the multiple implement input being a non-depth multiple implement input. As can be seen, object 302 has been selectedbased, at least in part, on a position of object 302 corresponding with selection region 322. In the example of FIGURE 3C, the selection of object 302 is indicated by way of object selection indicator 324. As depicted, object selection indicator 324 indicates selection of object 302 by way of outlining object 302 in a dashed line.

As discussed previously, in some circumstances, a user may desire to interact with a particular subset of objects within a three dimensional model. In such circumstances, the user may desire to select the particular subset of objects by way of a non-depth multiple implement input that indicates a selection region that encompasses the desired subset of objects. For example, the user may indicate a selection region that corresponds with an object and, subsequently, desire to enlarge the selection region such that the selection region corresponds with the object and another object. In such an example, the user may desire to select another object that is positioned within the three dimensional model at a positional depth that approximately corresponds with the positional depth of the object, and avoid selection of a different object that is positioned within the three dimensional model at a different positional depth. As such, the user may utilize a non-depth multiple implement input. In at least one example embodiment, a non-depth multiple implement input is an input that designates a selection region having a volumetric height and a volumetric width within a three dimensional model at a particular positional depth within the three dimensional model.

For example, a user may indicate a desire to select a particular object by way of a selection region that corresponds with the object. In such an example, a volumetric height and a volumetric width of the selection region may be based, at least in part, on the height and width associated with a non-depth multiple implement input, and a positional depth of the selection region may correspond with the positional depth of the object in the three dimensional model. In at least one example embodiment, an apparatus determines that the non-depth multiple implement input comprises a movement input that indicates a change in distance between at least two implements associated with the non-depth multiple implement input. In such an example embodiment, the apparatus may determine a changed volumetric height and a changed volumetric width based, at least in part, on the change in the distance. In such an example embodiment, the apparatus may determine a changed selection region such that the changed selection region remains at a position that corresponds with the positional depth and has a changed selection region size that corresponds with the changed volumetric height and the changed volumetric width.

As discussed previously, in order to facilitate selection of a particular object or subset of objects within a three dimensional model, it may be desirable to display an indication of the changed selection region. In at least one example embodiment, an apparatus causes display of a selection region indicator that indicates the changed selection region. The causation of display of the selection region indicator that indicates the changed selection region may be based, at least in part, on the determination of the changed selection region, the determination of the changed volumetric width and/or volumetric height, and/or the like. In such an example embodiment, the volumetric depth of the selection region may be independent of the movement input of the non-depth multiple implement input. For example, the apparatus may avoid changing of a volumetric depth of the selection region based, at least in part, on the multiple implement input being a non-depth multiple implement input. As such, a user may manipulate the size of a selection region while retaining the position of the selection region at a particular positional depth within the three dimensional model by way of utilization of a non-depth multiple implement input.

As discussed previously, in order to facilitate interaction with a particular object subsequent to indication of a desire to select the object by way of a selection region, it may be desirable to configure an apparatus such that the apparatus causes selection of one or more objects that correspond with the indicated selection region. For example, a user may cause selection of a particular object that is positioned at a positional depth within a three dimensional model, and may desire to select an another object that is positioned at the same positional depth within the three dimensional model. As such, the user may indicate a desire to expand the selection region by way of a movement input that indicates a change in distance between at least two implements associated with the non-depth multiple implement input. In such an example embodiment, the apparatus may determine a changed volumetric height and a changed volumetric width based, at least in part, on the change in the distance, and determine a changed selection region based, at least in part, on the changed volumetric height and the changed volumetric width. In at least one example embodiment, an apparatus determines that a position of the other object corresponds with the changed selection region, and causes selection of the other object based, at least in part, on the position of the other object corresponding with the changed selection region. In such an example embodiment, the positional depth of the object in the three dimensional model may correspond with the positional depth of the other object in the three dimensional model. Similarly, the positional depth of the selection region may correspond with the positional depth of the object, the other object, and/or the like. As discussed previously, the apparatus may cause display of an object selection indicator that indicates selection of the object, the other object, and/or the like, based, at least in part, on the selection of the object, the other object, and/or the like.

Since the user may desire to select objects that are positioned at a particular positional depth within the three dimensional model, the user may utilize a non-depth multiple implement input to indicate a desire to select objects that correspond with a planar selection region that is positioned at a positional depth that corresponds with the positional depth of the object that the user desires to select. In such an example, the user may indicate a desire to select another object that is also positioned at the positional depth of the object, the selection region, and/or the like, by way of a movement input that indicates a changed volumetric height and a changed volumetric width of the selection region in the three dimensional model. As such, the user may desire to avoid selection of a different object in the three dimensional model. For example, the different object may be positioned at a different positional depth within the model. In at least one example embodiment, an apparatus avoids selection of an object based, at least in part, on lack of correspondence between a positional depth of the object and a positional depth of the selection region. In such an example embodiment, the apparatus may determine that the positional depth of the object fails to correspond with the selection region. For example, a three dimension model may comprise a first object and a second object positioned at a positional depth, and a third object positioned at a different positional depth. In such an example, a difference between the positional depth of the first object and the positional depth of a third object may be less than a distance between the first object and the second object on a plane that is orthogonal to a depth axis. In such an example, despite the third object being closer to the first object than the second object is to the first object, the selection region indicated by the non-depth multiple implement input causes selection of the first object and the second object, and avoids selection of the third object. Selection of the first object and the second object may be based, at least in part, on the multiple implement input being a non-depth multiple implement input that indicates a selection region that causes selection of objects that are positioned at a particular positional depth within the three dimensional model that corresponds with the positional depth of the selection region.

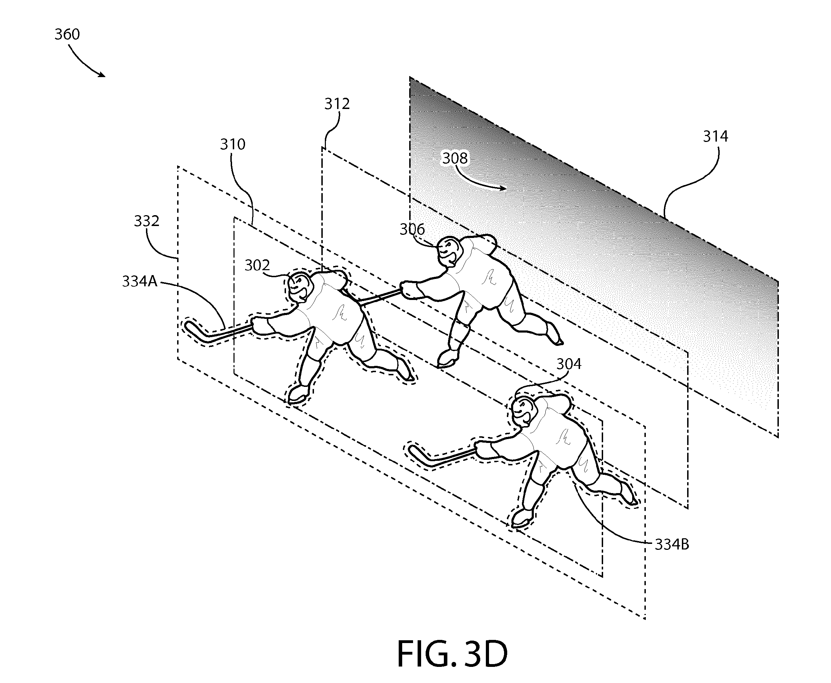

For example, as shown in the example of FIGURE 3D, objects 302 and 304 are positioned at positional depth 310. In the example of FIGURE 3D, a user may indicate a desire to select objects that are positioned at positional depth 310 by way of a non-depth multiple implement input that indicates positional depth 310. For example, the user may perform the non-depth multiple implement input at a position that corresponds with the position of object 302, a position that corresponds with a representation of object 302, and/or the like, as object 302 is positioned at positional depth 310. In this manner, selection region 322 may be determined based, at least in part, on the non-depth multiple implement input, at a positional depth that corresponds with positional depth 310. As such, object 302 and object 304 may be selected based, at least in part, on the positional depth of objects 302 and 304 corresponding with the positional depth of selection region 322.

FIGURE 3D is a diagram illustrating a selection region in relation to a three dimensional model according to at least one example embodiment. The example of FIGURE 3D depicts three dimensional model 360. Three dimensional model 360 corresponds with three dimensional model 300 of FIGURE 3A and three dimensional model 340 of FIGURE 3C. As such, three dimensional model 360 comprises object 302, object 304, object 306, and background 308. As can be seen, objects 302, 304, and 306 are located at various positions within three dimensional model 360. For example, objects 302 and 304 are positioned at positional depth 310 within three dimensional model 360, and object 306 is positioned at positional depth 312 within three dimensional model 360. In the example of FIGURE 3D, background 308 is positioned behind objects 302, 304, and 306, at positional depth 314 within three dimensional model 360.

Subsequent to the selection of object 302 in the example of FIGURE 3C, a user may desire to additionally select another object that is positioned at a positional depth that corresponds with the positional depth of object 302. As can be seen in the example of FIGURE 3C, object 302 and object 304 are positioned at positional depth 310. As such, the user may desire to additionally select object 304, and may indicate such a desire by way of a movement input that is associated with the non-depth multiple implement input of FIGURE 3C, a different non-depth multiple implement input, and/or the like. In this manner, the user may indicate a desire to select one or more additional objects that are positioned within three dimensional model 340 of FIGURE 3C that are positioned at a positional depth that corresponds with the positional depth of object 302 and/or selection region 322, namely, additional objects that are positioned at positional depth 310. In the example of FIGURE 3D, a selection region 332 is indicated by a selection region indicator that outlines selection region 332 in a dashed line. As can be seen, selection region 332 is a planar selection region. In the example of FIGURE 3D, the apparatus may determine the selection region to be a planar selection region based, at least in part, on the multiple implement input being a non-depth multiple implement input. As can be seen, object 302 has been selected based, at least in part, on a position of object 302 corresponding with selection region 332. Additionally, as can be seen, object 304 has been selected based, at least in part, on a position of object 304 corresponding with selection region 332. In the example of FIGURE 3D, the selection of object 302 is indicated by way of object selection indicator 334A, and the selection of object 304 is indicated by way of object selection indicator 334B. As depicted, object selection indicators 334A and 334B indicate selection of objects 302 and 304, respectively, by way of outlining objects 302 and 304 in a dashed line.

In the example of FIGURE 3D, object 306 is positioned at positional depth 312. As can be seen, object 306 is closer to object 302 than object 304 is to object 302. However, as can be seen, selection region 332 failed to cause selection of object 306 despite a positional height and a positional depth of object 306 corresponding with selection region 332. In the example of FIGURE 3D, the apparatus avoided selection of object 306 based, at least in part, on the lack of correspondence between the positional depth of object 306, positional depth 312, and the positional depth of selection region 332 and/or object 302, positional depth 310. In this manner, the apparatus avoids selection of object 306 based, at least in part, on the multiple implement input being a non-depth multiple implement input.

In some circumstances, a user of an apparatus may indicate a selection region by way of a non-depth multiple implement input. In such circumstances, the indicated selection region may have a selection region size that corresponds with a volumetric height and a volumetric width, as indicated by the non-depth multiple implement input. In such circumstances, the user may desire to shift the position of the selection region within the three dimensional model, within the representation of the three dimensional model, and/or the like. As such, it may be desirable to configure the apparatus such that the user may indicate the user's desire to reposition the selection region. In at least one example embodiment, an apparatus receives information indicative of a shift in position of a non-depth multiple implement input. The shift in position of the non-depth multiple implement input may indicate movement of a plurality of implements associated with the non-depth multiple implement input. For example, the user may shift two finger, three fingers, four stylus, and/or the like, in one or more dimension. In such an example, the distance between the implements may remain constant, such that the selection region size remains constant. In another example, the distance between the implements may vary slightly, may vary greatly, and/or the like. In such an example, the selection region size may differ slightly, may differ greatly, and/or the like, in addition to the position of the selection region changing such that the position of the selection region corresponds with the position of the non-depth multiple implement input. In this manner, a positional height and/or a positional width of the selection region may shift independent of the selection region size of the selection region.

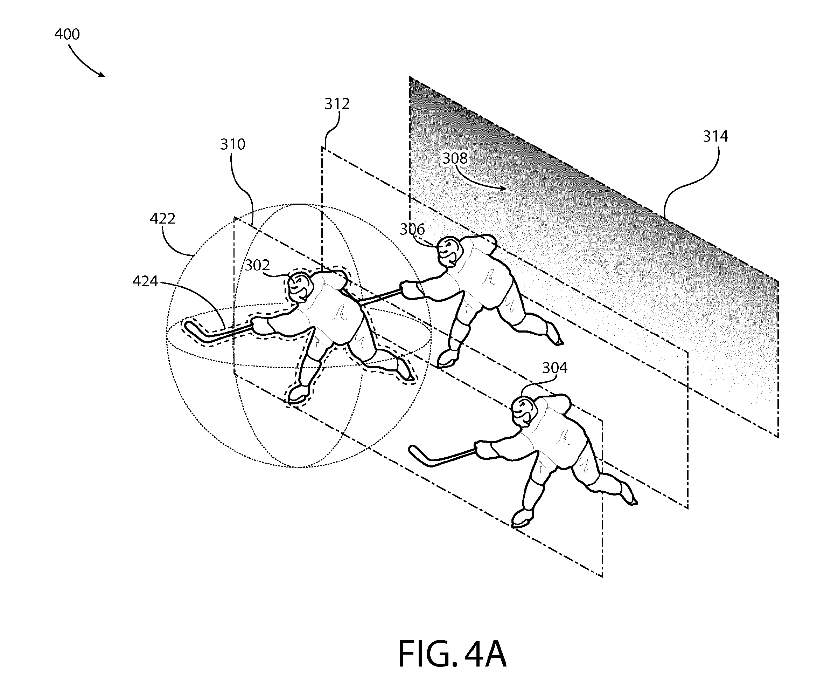

FIGURES 4A-4B are diagrams illustrating a selection region in relation to a three dimensional model according to at least one example embodiment. The examples of FIGURES 4A-4B are merely examples and do not limit the scope of the claims. For example, three dimensional model configuration may vary, three dimensional model composition may vary, selection region configuration may vary, and/or the like.

As discussed previously, interaction with a particular object or subset of objects in a three dimensional model may be complicated by the three dimensional space of the three dimensional model. As discussed regarding the non-depth multiple implement input, in some circumstances, a user may desire to interact with an object or a subset of object that are positioned at a particular positional depth within a three dimensional model. In other circumstances, the user may desire to interact with an object or a subset of objects that are positioned within a range of positional depths within the three dimensional model. In such circumstances, the user may desire to utilize another multiple implement input that allows the user to indicate a desire to select an object or a subset of objects that are positioned within a selection region that has a selection region size that is characterized by a volumetric height, a volumetric width, and a volumetric depth. Thus, the selection region may cause selection of objects that are positioned within a range of positional heights, positional widths, and positional depths within the three dimensional model.

In at least one example embodiment, an apparatus receives information indicative of a multiple implement input. In such an example embodiment, the multiple implement input may be associated with a number of implements. The number of implements that are associated with the multiple implement input may indicate a desire to invoke a certain operation, a desire to perform a particular interaction, and/or the like. For example, the number of implements may indicate a desire to interact with a particular portion of the three dimensional model, to interact with objects that are positioned at a particular range of positional depth within the three dimensional model, and/or the like. In at least one example embodiment, an apparatus determines that a multiple implement input is a depth multiple implement input based, at least in part, on a number of implements associated with the multiple implement input. For example, the number of implements may be three implements, and the determination that the multiple implement input is a depth multiple implement input may be based, at least in part, on the receipt of information indicative of the multiple implement input that is associated with three implements, on the number of implements being three implements, and/or the like. In such an example, the three implements may be three fingers, similar as described regarding FIGURE 2C and FIGURE 2D. In another example, the number of implements may be above a predefined number of implements threshold, below a predefined number of implements threshold, and/or the like, and the determination that the multiple implement input is a depth multiple implement input is based, at least in part, on the receipt of information indicative of the multiple implement input that is associated with a number of implements that exceeds the predefined number of implements threshold, fails to exceed the predefined number of implements threshold, and/or the like. In at least one example embodiment, an apparatus determines that a multiple implement input is a depth multiple implement input based, at least in part, on an increase in a number of implements associated with the multiple implement input, a decrease in a number of implements associated with the multiple implement input, and/or the like.

In at least one example embodiment, an apparatus determines a width in the three dimensional model, a height in the three dimensional model, and a depth in the three dimensional model. The determination of the width, the height, and the depth may be based, at least in part, on the depth multiple implement input. For example, as depicted in the example of FIGURE 2C, the width, the height, and the depth may be based, at least in part, on a distance between at least two of implements 212A, 212B, and 214. As can be seen in the example of FIGURE 2C, implement 212A is closer to implement 212B than implement 212A is to implement 214. Similarly, implement 212B is closer to implement 212A than implement 212B is to implement 214. As such, implements 212A and 212B may be treated as a pair of implements such that the distance indicated by the multiple implement input of FIGURE 2C is a distance between implements 212A and 214, a distance between implements 212B and 214, an average of the distances between implements 212A and 214 and implements 212B and 214, and/or the like. In at least one example embodiment, the depth multiple implement input comprises a movement input. The movement input may indicate a change in distance between at least two implements that are associated with the depth multiple implement input. In such an example embodiment, the apparatus may determine that the depth multiple implement input comprises a movement input that indicates a change in distance between at least two of the implements, and determine the width, the height, and the depth based, at least in part, on the change in the distance.

As discussed previously, when interacting with a three dimensional model, a user may desire to interact with the three dimensional model at a range of positional depths within the three dimensional model, may desire to interact with an object that is positioned at a positional depth within the three dimensional model, may desire to interact with a subset of objects that are positioned within a range of positional depths within the three dimensional model, and/or the like. As such, it may be desirable to configure an apparatus such that the apparatus may determine a positional depth within the three dimensional model based, at least in part, on the user interacting with the three dimensional model by way of a depth multiple implement input. In at least one example embodiment, an apparatus determines a positional depth in the three dimensional model to associate with a depth multiple implement input. In such an example embodiment, the determination of the positional depth may comprise identification of an object that has a position that corresponds with a position of the depth multiple implement input, and determination of the positional depth to be a depth in the three dimensional model that corresponds with the object. For example, as depicted in the examples of FIGURE 3A and FIGURE 3B, a user may indicate a desire to interact with object 302 by way of performance of a depth multiple implement input at a position that corresponds with representation 302R. In such an example, receipt of the depth multiple implement input at the position that corresponds with representation 302R of FIGURE 3B may indicate a desire to interact, at least initially, with three dimensional model 300 of FIGURE 3A at a positional depth that corresponds with object 302 of FIGURE 3A, specifically, at positional depth 310 within three dimensional model 300.

As discussed previously, in many circumstances, a user may indicate a desire to select one or more objects comprised by a three dimensional model by way of a multiple implement input. In such circumstances, the user may indicate to select one or more objects that are positioned within a range of positional depths within the three dimensional model by way of performance of a depth multiple implement input. For example, the apparatus may receive information indicative of a multiple implement input, determine that the multiple implement input is a depth multiple implement input, and determine a height, a width, and a depth, and a positional depth within the three dimensional model based, at least in part, on the depth multiple implement input. In at least one example embodiment, an apparatus determines a selection region that has a position that corresponds with the positional depth of the depth multiple implement input. In such an example embodiment, the selection region may have a selection region size that corresponds with a volumetric width, a volumetric height, and a volumetric depth, such that the volumetric width corresponds with the width, the volumetric height corresponds with the height, and the volumetric depth corresponds with the depth. In such an example embodiment, the volumetric depth of the selection region may correspond with a predetermined volumetric depth. For example, the predetermined volumetric depth may indicate a particular volumetric depth based, at least in part, on the multiple implement input being a depth multiple implement input. The determined volumetric depth may be preconfigured, may be user definable, and/or the like.

In order to facilitate accurate selection of objects within the three dimensional model, it may be desirable to provide a user with feedback that is indicative of a selection region, a selection region size, and/or the like. In at least one example embodiment, an apparatus causes display of a selection region indicator that indicates the selection region. The causation of display of the selection region indicator may be based, at least in part, on the determination of the selection region, the determination of the height, the width, and the depth, and/or the like. The selection region indicator may be displayed in relation to a three dimensional model, a representation of a three dimensional model, and/or the like, such that the selection region indicator indicates a location of the selection region, a selection region size of the selection region, and/or the like. For example, the selection region indicator may indicate a particular selection region by way of outlining the selection region in a dashed line, displaying of a highlighted region that indicates the selection region in relation to the representation of the three dimensional model, and/or the like. In at least one example embodiment, the apparatus determines a three dimensional selection region based, at least in part, on the multiple implement input being a depth multiple implement input. In such an example embodiment, the selection region indicator may indicate a configuration of the three dimensional selection region, a selection region size of the three dimensional selection region, and/or the like. For example, the selection region may be spherical, and the selection region indicator may indicate the spherical configuration of the selection region. In another example, the selection region may be a rectangular prism, and the selection region indicator may indicate the rectangular prism configuration of the selection region.

In order to facilitate interaction with a particular object subsequent to indication of a desire to select the object by way of a selection region, it may be desirable to configure an apparatus such that the apparatus causes selection of one or more objects that correspond with the indicated selection region. In at least one example embodiment, an apparatus causes selection of an object. In such an example, the apparatus may select the object based, at least in part, on a selection region. For example, the apparatus may determine that a position of the object corresponds with the selection region, and cause selection of the object based, at least in part, on the position of the object corresponding with the selection region.

In order to facilitate accurate selection of objects within the three dimensional model, it may be desirable to provide a user with feedback that is indicative of a selection of a particular object, selection of a particular subset of objects, and/or the like. In at least one example embodiment, an apparatus causes display of an object selection indicator that indicates selection of an object. The causation of display of the object selection indicator may be based, at least in part, on the selection of the object. The object selection indicator may be displayed in relation to the selected object, a representation of the selected object, and/or the like, such that the object selection indicator indicates the selection of the object in the three dimensional model, the selection of the object in the representation of the three dimensional model, and/or the like. For example, the object selection indicator may indicate selection of a particular object by way of surrounding the object in a dashed outline, surrounding the representation of the object in a dashed outline, highlighting the selected object, shading the representation of the selected object in a distinctive color, and/or the like.

FIGURE 4A is a diagram illustrating a selection region in relation to a three dimensional model according to at least one example embodiment. The example of FIGURE 4A depicts three dimensional model 400. Three dimensional model 400 corresponds with three dimensional model 300 of FIGURE 3A, three dimensional model 340 of FIGURE 3C, and three dimensional model 360 of FIGURE 3D. As such, three dimensional model 400 comprises object 302, object 304, object 306, and background 308. As can be seen, objects 302, 304, and 306 are located at various positions within three dimensional model 400. For example, objects 302 and 304 are positioned at positional depth 310 within three dimensional model 400, and object 306 is positioned at positional depth 312 within three dimensional model 400. In the example of FIGURE 4A, background 308 is positioned behind objects 302, 304, and 306, at positional depth 314 within three dimensional model 400.

In the example of FIGURE 4A, a user may desire to select object 302, and may indicate such a desire by way of a depth multiple implement input at a position that corresponds with object 302. In this manner, the user may indicate a desire to select one or more objects that are positioned within three dimensional model 400 at a range of positional heights, positional widths, and positional depths that extend in reference to object 302. In the example of FIGURE 4A, a selection region 422 is indicated by a selection region indicator that outlines selection region 422 in a dashed line. As can be seen, selection region 422 is a spherical selection region, and is indicated by a selection region indicator that indicates the spherical volume of selection region 422. In the example of FIGURE 4A, the apparatus determined the selection region to be a three dimensional selection region with a volumetric depth based, at least in part, on the multiple implement input being a depth multiple implement input. As can be seen, object 302 has been selected based, at least in part, on a position of object 302 corresponding with selection region 422. In the example of FIGURE 4A, the selection of object 302 is indicated by way of object selection indicator 424. As depicted, object selection indicator 424 indicates selection of object 302 by way of outlining object 302 in a dashed line.

As discussed previously, in some circumstances, a user may desire to interact with a particular subset of objects within a three dimensional model. In such circumstances, the user may desire to select the particular subset of objects by way of a depth multiple implement input that indicates a selection region that encompasses the desired subset of objects. For example, the user may indicate a selection region that corresponds with an object and, subsequently, desire to enlarge the selection region such that the selection region corresponds with the object and another object. In such an example, the user may desire to select another object that is positioned within the three dimensional model at another positional depth that fails to correspond with a positional depth of the object. As such, the user may utilize a depth multiple implement input. In at least one example embodiment, a depth multiple implement input is an input that designates a selection region having a volumetric height, a volumetric width, and a volumetric depth within a three dimensional model. In such an example embodiment, the selection region may cause selection of objects that are positioned within a range of positional heights, positional widths, and positional depths that correspond with the selection region.

For example, a user may indicate a desire to select a particular object by way of a selection region that corresponds with the object. In such an example, a volumetric height, a volumetric width, and a volumetric depth of the selection region may be based, at least in part, on the height, the width, and the depth associated with a depth multiple implement input, and a positional depth of the selection region may correspond with the positional depth of the object in the three dimensional model. In at least one example embodiment, an apparatus determines that the depth multiple implement input comprises a movement input that indicates a change in distance between at least two implements associated with the depth multiple implement input. In such an example embodiment, the apparatus may determine a changed volumetric height, a changed volumetric width, and a changed volumetric depth based, at least in part, on the change in the distance. In such an example embodiment, the apparatus may determine a changed selection region such that the changed selection region remains at a position that corresponds with the positional depth and has a changed selection region size that corresponds with the changed volumetric height, the changed volumetric width, and the changed volumetric depth.

As discussed previously, in order to facilitate selection of a particular object or subset of objects within a three dimensional model, it may be desirable to display an indication of the changed selection region. In at least one example embodiment, an apparatus causes display of a selection region indicator that indicates the changed selection region. The causation of display of the selection region indicator that indicates the changed selection region may be based, at least in part, on the determination of the changed selection region, the determination of the changed volumetric width and/or volumetric height, and/or the like. In such an example embodiment, the volumetric depth of the selection region may be independent of the movement input of the non-depth multiple implement input. For example, the apparatus may avoid changing of a volumetric depth of the selection region based, at least in part, on the multiple implement input being a non-depth multiple implement input. As such, a user may manipulate the size of a selection region while retaining the position of the selection region at a particular positional depth within the three dimensional model by way of utilization of a non-depth multiple implement input.

As discussed previously, in order to facilitate interaction with a particular object subsequent to indication of a desire to select the object by way of a selection region, it may be desirable to configure an apparatus such that the apparatus causes selection of one or more objects that correspond with the indicated selection region. For example, a user may cause selection of a particular object that is positioned at a positional depth within a three dimensional model, and may desire to select another object that is positioned at a different positional depth within the three dimensional model. As such, the user may indicate a desire to expand the selection region by way of a movement input that indicates a change in distance between at least two implements associated with the depth multiple implement input. In such an example embodiment, the apparatus may determine a changed volumetric height, a changed volumetric width, and a changed volumetric depth based, at least in part, on the change in the distance, and determine a changed selection region based, at least in part, on the changed volumetric height, the changed volumetric width, and the changed volumetric depth. In at least one example embodiment, an apparatus determines that a position of the other object corresponds with the changed selection region, and causes selection of the other object based, at least in part, on the position of the other object corresponding with the changed selection region. In such an example embodiment, the positional depth of the object in the three dimensional model may fail to correspond with the positional depth of the other object in the three dimensional model. As discussed previously, the apparatus may cause display of an object selection indicator that indicates selection of the object, the other object, and/or the like, based, at least in part, on the selection of the object, the other object, and/or the like.

Since the user may desire to select objects that are positioned within a range of positional depths within the three dimensional model, the user may utilize a depth multiple implement input to indicate a desire to select objects that correspond with a three dimensional selection region that is positioned at a positional depth that corresponds with the positional depth of the object that the user initially selects. In such an example, the user may indicate a desire to select another object that is positioned at a different positional depth by way of a movement input that indicates a changed volumetric height, a changed volumetric width, and a changed volumetric depth of the selection region in the three dimensional model. As such, the user may desire to avoid selection of a different object in the three dimensional model. For example, the different object may be positioned at a positional depth that corresponds with the positional depth of the object, at a positional depth that corresponds with the different positional depth of the other object, at another different positional depth, and/or the like. In at least one example embodiment, an apparatus avoids selection of an object based, at least in part, on lack of correspondence between the position of the object and a selection region. For example, a three dimension model may comprise a first object and a second object positioned at a positional depth, and a third object positioned at a different positional depth. In such an example, a difference between the positional depth of the first object and the positional depth of a third object may be less than a distance between the first object and the second object on a plane that is orthogonal to a depth axis. As such, since the third object is closer to the first object than the second object is to the first object, the selection region indicated by the depth multiple implement input may cause selection of the first object and the third object, and avoids selection of the second object. Selection of the first object and the third object may be based, at least in part, on the multiple implement input being a depth multiple implement input that indicates a selection region that causes selection of objects that are positioned within a range of positional heights, positional widths, and positional depths within the three dimensional model.

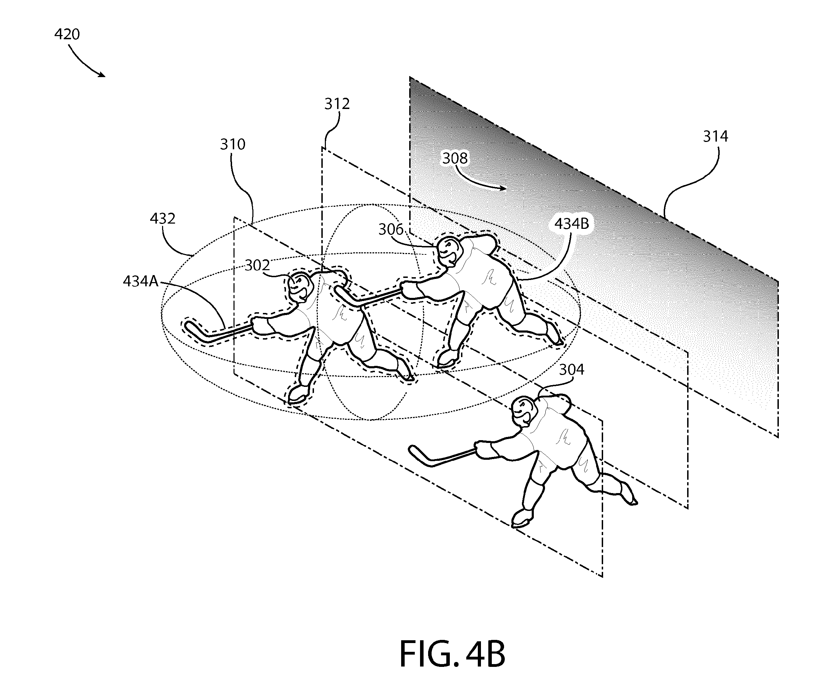

FIGURE 4B is a diagram illustrating a selection region in relation to a three dimensional model according to at least one example embodiment. The example of FIGURE 4B depicts three dimensional model 420. Three dimensional model 420 corresponds with three dimensional model 300 of FIGURE 3A, three dimensional model 340 of FIGURE 3C, three dimensional model 360 of FIGURE 3D, and three dimensional model 400 of FIGURE 4A. As such, three dimensional model 420 comprises object 302, object 304, object 306, and background 308. As can be seen, objects 302, 304, and 306 are located at various positions within three dimensional model 420. For example, objects 302 and 304 are positioned at positional depth 310 within three dimensional model 420, and object 306 is positioned at positional depth 312 within three dimensional model 420. In the example of FIGURE 4B, background 308 is positioned behind objects 302, 304, and 306, at positional depth 314 within three dimensional model 420.

Subsequent to the selection of object 302 in the example of FIGURE 4A, a user may desire to additionally select another object within three dimensional model 420. For example, the user may desire to select the object that is closest to object 302, the object that is behind object 302, and/or the like. As can be seen in the example of FIGURE 4A, object 302 is positioned at positional depth 310, and object 306 is positioned at positional depth 312. As such, the user may desire to additionally select object 306, and may indicate such a desire by way of a movement input that is associated with the depth multiple implement input of FIGURE 4A, a different depth multiple implement input, and/or the like. In this manner, the user may indicate a desire to select one or more additional objects that are positioned within three dimensional model 400 of FIGURE 4A that are positioned within a range of positional heights, positional widths, and positional depths. In the example of FIGURE 4B, a selection region 432 is indicated by a selection region indicator that outlines selection region 432 in a dashed line. As can be seen, selection region 432 is an ellipsoid selection region, and is indicated by a selection region indicator that indicates the ellipsoid volume of selection region 432. In the example of FIGURE 4B, the apparatus determined the selection region to be a three dimensional selection region with a volumetric depth based, at least in part, on the multiple implement input being a depth multiple implement input. As can be seen, object 302 has been selected based, at least in part, on a position of object 302 corresponding with selection region 432. Additionally, as can be seen, object 306 has been selected based, at least in part, on a position of object 306 corresponding with selection region 432. In the example of FIGURE 4B, the selection of object 302 is indicated by way of object selection indicator 434A, and the selection of object 306 is indicated by way of object selection indicator 434B. As depicted, object selection indicators 434A and 434B indicate selection of objects 302 and 306, respectively, by way of outlining objects 302 and 306 in a dashed line.

In the example of FIGURE 4B, object 304 is positioned at positional depth 310. As can be seen, object 304 is further from object 302 than object 306 is from object 302. As such, selection region 432 failed to cause selection of object 304. In the example of FIGURE 4B, the apparatus avoided selection of object 304 based, at least in part, on the lack of correspondence between the position of object 304 and the selection region 432. In this manner, the apparatus avoids selection of object 304 based, at least in part, on the multiple implement input being a depth multiple implement input.

In some circumstances, a user of an apparatus may indicate a selection region by way of a depth multiple implement input. In such circumstances, the indicated selection region may have a selection region size that corresponds with a volumetric height, a volumetric width, and a volumetric depth, as indicated by the depth multiple implement input. In such circumstances, the user may desire to shift the position of the selection region within the three dimensional model, within the representation of the three dimensional model, and/or the like. As such, it may be desirable to configure the apparatus such that the user may indicate the user's desire to reposition the selection region. In at least one example embodiment, an apparatus receives information indicative of a shift in position of a depth multiple implement input. The shift in position of the depth multiple implement input may indicate movement of a plurality of implements associated with the non-depth multiple implement input. For example, the user may shift two finger, three fingers, four stylus, and/or the like, in one or more dimension. In such an example, the distance between the implements may remain constant, such that the selection region size remains constant. In another example, the distance between the implements may vary slightly, may vary greatly, and/or the like. In such an example, the selection region size may differ slightly, may differ greatly, and/or the like, in addition to the position of the selection region changing such that the position of the selection region corresponds with the position of the depth multiple implement input. For example, the selection region may shift in one or more dimension within the three dimensional model, the representation of the three dimensional model, and/or the like. In this manner, a positional height, a positional width, and/or a positional depth of the selection region may shift independent of the selection region size of the selection region.

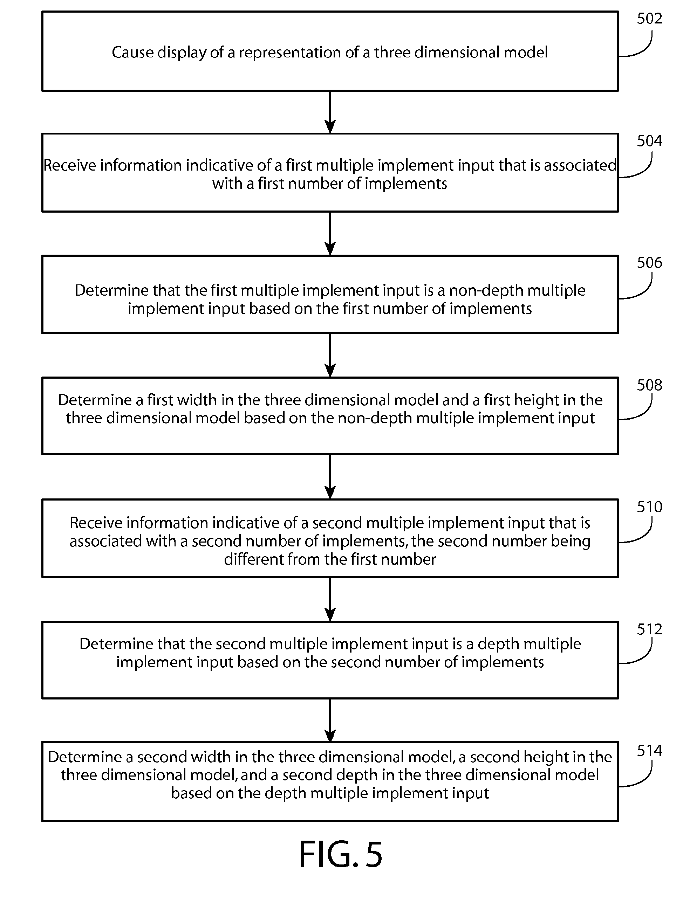

FIGURE 5 is a flow diagram illustrating activities associated with receipt of a multiple implement input that is associated with a number of implements according to at least one example embodiment. In at least one example embodiment, there is a set of operations that corresponds with the activities of FIGURE 5. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 5.

At block 502, the apparatus causes display of a representation of a three dimensional model. The causation of display, the three dimensional model, and the representation of the three dimensional model may be similar as described regarding FIGURES 3A-3D, FIGURES 4A-4B, FIGURES 8A-8D, and FIGURES 9A-9B.

At block 504, the apparatus receives information indicative of a first multiple implement input that is associated with a first number of implements. The receipt, the first multiple implement input, and the first number of implements may be similar as described regarding FIGURES 2A-2D, FIGURES 3A-3D, and FIGURES 8A-8D.

At block 506, the apparatus determines that the first multiple implement input is a non-depth multiple implement input based, at least in part, on the first number of implements. The determination and the non-depth multiple implement input may be similar as described regarding FIGURES 2A-2D, FIGURES 3A-3D, and FIGURES 8A-8D.

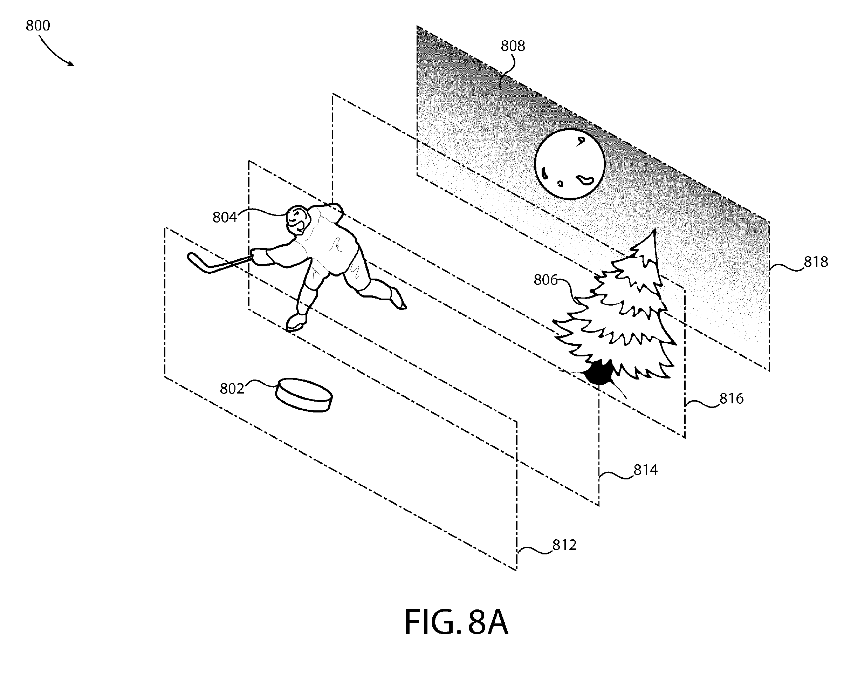

At block 508, the apparatus determines a first width in the three dimensional model and a first height in the three dimensional model based, at least in part, on the non-depth multiple implement input. The determination, the first width, and the first height may be similar as described regarding FIGURES 3A-3D and FIGURES 8A-8D.

At block 510, the apparatus receives information indicative of a second multiple implement input that is associated with a second number of implements, the second number being different from the first number. The receipt, the second multiple implement input, and the second number of implements may be similar as described regarding FIGURES 2A-2D, FIGURES 4A-4B, and FIGURES 9A-9B.

At block 512, the apparatus determines that the second multiple implement input is a depth multiple implement input based, at least in part, on the second number of implements. The determination and the depth multiple implement input may be similar as described regarding FIGURES 2A-2D, FIGURES 4A-4B, and FIGURES 9A-9B.

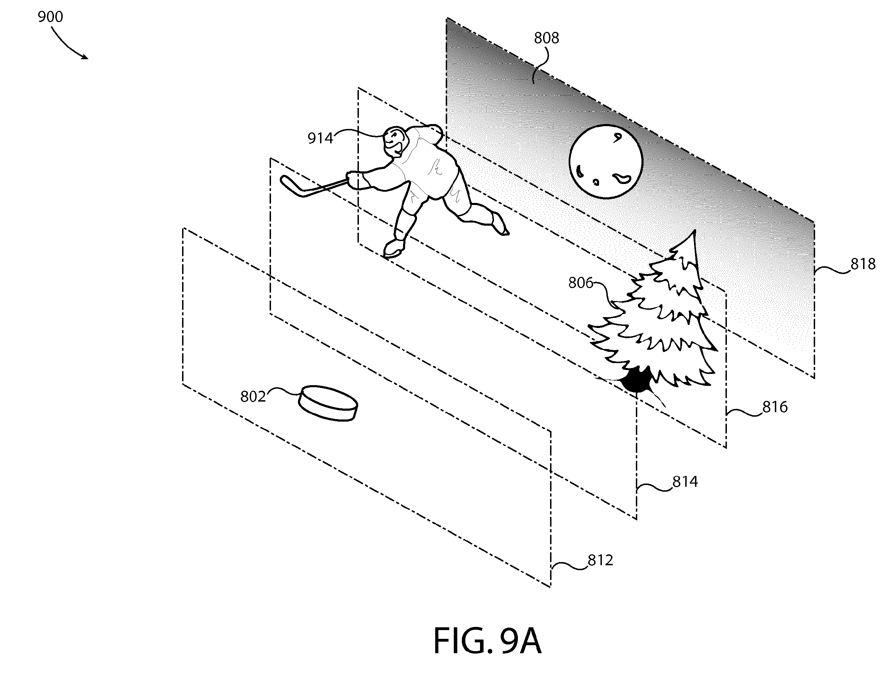

At block 514, the apparatus determines a second width in the three dimensional model, a second height in the three dimensional model, and a second depth in the three dimensional model based, at least in part, on the depth multiple implement input. The determination, the second width, the second height, and the second depth may be similar as described regarding FIGURES 4A-4B and FIGURES 9A-9B.

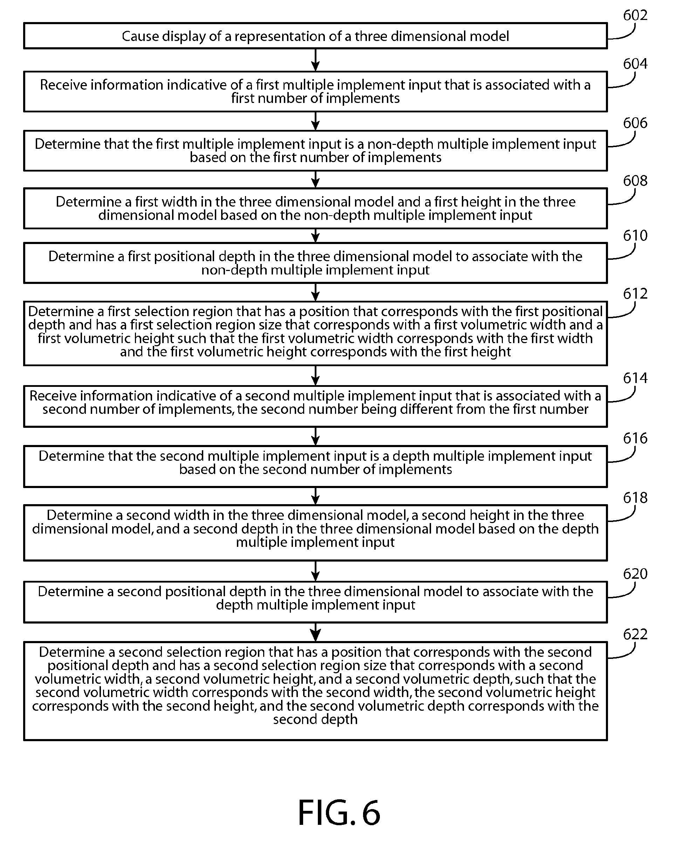

FIGURE 6 is a flow diagram illustrating activities associated with determination of a selection region according to at least one example embodiment. In at least one example embodiment, there is a set of operations that corresponds with the activities of FIGURE 6. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1 cause the apparatus to perform set of operations of FIGURE 6.

As discussed previously, in many circumstances, a user may desire to interact with and/or manipulate one or more objects comprised by a three dimensional model. As such, it may be desirable to allow a user to select one or more objects by way of a selection region.

At block 602, the apparatus causes display of a representation of a three dimensional model. The causation of display, the three dimensional model, and the representation of the three dimensional model may be similar as described regarding FIGURES 3A-3D, FIGURES 4A-4B, FIGURES 8A-8D, and FIGURES 9A-9B.

At block 604, the apparatus receives information indicative of a first multiple implement input that is associated with a first number of implements. The receipt, the first multiple implement input, and the first number of implements may be similar as described regarding FIGURES 2A-2D, FIGURES 3A-3D, and FIGURES 8A-8D.

At block 606, the apparatus determines that the first multiple implement input is a non-depth multiple implement input based, at least in part, on the first number of implements. The determination and the non-depth multiple implement input may be similar as described regarding FIGURES 2A-2D, FIGURES 3A-3D, and FIGURES 8A-8D.

At block 608, the apparatus determines a first width in the three dimensional model and a first height in the three dimensional model based, at least in part, on the non-depth multiple implement input. The determination, the first width, and the first height may be similar as described regarding FIGURES 3A-3D and FIGURES 8A-8D.

At block 610, the apparatus determines a first positional depth in the three dimensional model to associate with the non-depth multiple implement input. The determination and the first positional depth may be similar as described regarding FIGURES 3A-3D and FIGURES 8A-8D.

At block 612, the apparatus determines a first selection region that has a position that corresponds with the first positional depth and has a first selection region size that corresponds with a first volumetric width and a first volumetric height such that the first volumetric width corresponds with the first width and the first volumetric height corresponds with the first height. The determination, the first selection region, the position, the first selection region size, the first volumetric width, and the first volumetric height may be similar as described regarding FIGURES 3A-3D and FIGURES 8A-8D.

At block 614, the apparatus receives information indicative of a second multiple implement input that is associated with a second number of implements, the second number being different from the first number. The receipt, the second multiple implement input, and the second number of implements may be similar as described regarding FIGURES 2A-2D, FIGURES 4A-4B, and FIGURES 9A-9B.

At block 616, the apparatus determines that the second multiple implement input is a depth multiple implement input based, at least in part, on the second number of implements. The determination and the depth multiple implement input may be similar as described regarding FIGURES 2A-2D, FIGURES 4A-4B, and FIGURES 9A-9B.

At block 618, the apparatus determines a second width in the three dimensional model, a second height in the three dimensional model, and a second depth in the three dimensional model based, at least in part, on the depth multiple implement input. The determination, the second width, the second height, and the second depth may be similar as described regarding FIGURES 4A-4B and FIGURES 9A-9B.

At block 620, the apparatus determines a second positional depth in the three dimensional model to associate with the depth multiple implement input. The determination and the second positional depth may be similar as described regarding FIGURES 4A-4B and FIGURES 9A-9B.

At block 622, the apparatus determines a second selection region that has a position that corresponds with the second positional depth and has a second selection region size that corresponds with a second volumetric width, a second volumetric height, and a second volumetric depth, such that the second volumetric width corresponds with the second width, the second volumetric height corresponds with the second height, and the second volumetric depth corresponds with the second depth. The determination, the second selection region, the position, the second volumetric width, the second volumetric height, and the second volumetric depth may be similar as described regarding FIGURES 4A-4B and FIGURES 9A-9B.

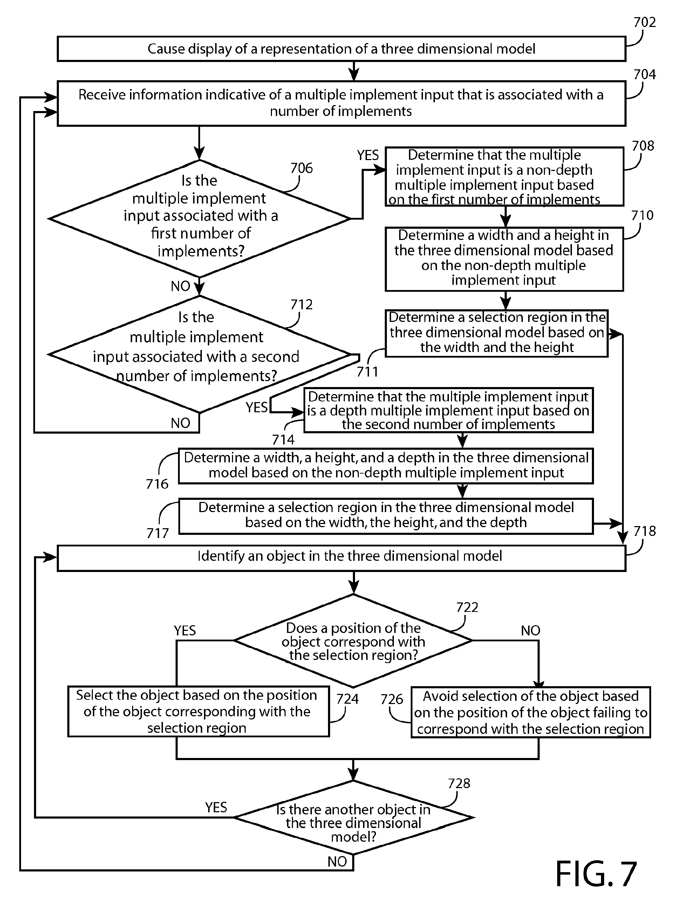

FIGURE 7 is a flow diagram illustrating activities associated with selection of an object according to at least one example embodiment. In at least one example embodiment, there is a set of operations that corresponds with the activities of FIGURE 7. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 7.

As discussed previously, in many circumstances, it may be desirable to select an object by way of a selection region. As such, it may be desirable to select an object that corresponds with the selection region and avoid selection of an object that fails to correspond with the selection region.

At block 702, the apparatus causes display of a representation of a three dimensional model. The causation of display, the three dimensional model, and the representation of the three dimensional model may be similar as described regarding FIGURES 3A-3D, FIGURES 4A-4B, FIGURES 8A-8D, and FIGURES 9A-9B.

At block 704, the apparatus receives information indicative of a first multiple implement input that is associated with a first number of implements. The receipt, the first multiple implement input, and the first number of implements may be similar as described regarding FIGURES 2A-2D, FIGURES 3A-3D, and FIGURES 8A-8D.

At block 706, the apparatus determines whether the multiple implement input is associated with a first number of implements. If the multiple implement input is associated with the first number of implements, flow proceeds to block 708. If the multiple implement input fails to be associated with the first number of implements, flow proceeds to block 712. The determination and the first number of implements may be similar as described regarding FIGURES 2A-2B, FIGURES 3A-3D, and FIGURES 8A-8D.

At block 708, the apparatus determines that the first multiple implement input is a non-depth multiple implement input based, at least in part, on the first number of implements. The determination and the non-depth multiple implement input may be similar as described regarding FIGURES 2A-2D, FIGURES 3A-3D, and FIGURES 8A-8D.

At block 710, the apparatus determines a width in the three dimensional model and a height in the three dimensional model based, at least in part, on the non-depth multiple implement input. The determination, the width, and the height may be similar as described regarding FIGURES 3A-3D and FIGURES 8A-8D.

At block 711, the apparatus determines a selection region that has a position that corresponds with a positional depth and has a selection region size that corresponds with a volumetric width and a volumetric height such that the volumetric width corresponds with the width and the volumetric height corresponds with the height. The determination, the selection region, the position, the positional depth, the selection region size, the volumetric width, and the volumetric height may be similar as described regarding FIGURES 3A-3D and FIGURES 4A-4B.

At block 712, the apparatus determines whether the multiple implement input is associated with a second number of implements. If the multiple implement input is associated with the second number of implements, flow proceeds to block 714. If the multiple implement input fails to be associated with the first number of implements, flow returns to block 704. The determination and the second number of implements may be similar as described regarding FIGURES 2A-2B, FIGURES 4A-4B, and FIGURES 9A-9B.

At block 714, the apparatus determines that the second multiple implement input is a depth multiple implement input based, at least in part, on the second number of implements. The determination and the depth multiple implement input may be similar as described regarding FIGURES 2A-2D, FIGURES 4A-4B, and FIGURES 9A-9B.

At block 716, the apparatus determines a second width in the three dimensional model, a second height in the three dimensional model, and a second depth in the three dimensional model based, at least in part, on the depth multiple implement input. The determination, the second width, the second height, and the second depth may be similar as described regarding FIGURES 4A-4B and FIGURES 9A-9B.

At block 717, the apparatus determines a selection region that has a position that corresponds with a positional depth and has a selection region size that corresponds with a volumetric width, a volumetric height, and a volumetric depth, such that the volumetric width corresponds with the width, the volumetric height corresponds with the height, and the volumetric depth corresponds with the depth. The determination, the selection region, the position, the positional depth, the selection region size, the volumetric width, the volumetric height, and the volumetric depth may be similar as described regarding FIGURES 3A-3D and FIGURES 4A-4B.

At block 718, the apparatus identifies an object in the three dimensional model that corresponds with a position of the multiple implement input. The identification, the object, and the position of the multiple implement input may be similar as described regarding FIGURES 2A-2D, FIGURES 3A-3D, and FIGURES 4A-4B.

At block 722, the apparatus determines whether a position of the object corresponds with the selection region. If the position of the object corresponds with the selection region, flow proceeds to block 724. If the position of the object fails to correspond with the selection region, flow proceeds to block 726. The determination and the position of the object may be similar as described regarding FIGURES 3A-3D and FIGURES 4A-4B.

At block 724, the apparatus selects the object based, at least in part, on the position of the object correspond with the selection region. The selection may be similar as described regarding FIGURES 3A-3D and FIGURES 4A-4B.

At block 726, the apparatus avoids selection of the object based, at least in part, on the position of the object failing to correspond with the selection region. The avoidance of selection may be similar as described regarding FIGURES 3A-3D and FIGURES 4A-4B.

At block 728, the apparatus determines whether there is another object in the three dimensional model. If there is another object in the three dimensional model, flow returns to block 718. If there fails to be another object in the three dimensional model, flow returns to block 704. In at least one example embodiment, the determination of whether there is another object in the three dimensional model comprises determination of a number of objects comprised by the three dimensional model, and determination that the number of identified objects is less than the number of objects in the three dimensional model.

FIGURES 8A-8D are diagrams illustrating a three dimensional model and/or a representation of a three dimensional model according to at least one example embodiment. The examples of FIGURES 8A-8D are merely examples and do not limit the scope of the claims. For example, three dimensional model configuration may vary, representations may vary, three dimensional model composition may vary, and/or the like.

As discussed previously, in many circumstances, a user may desire to interact with and/or manipulate an object that is comprised by a three dimensional model. For example, the user may desire to move the object within the three dimensional model, scale the object, resize the object, pull the object to the front of the three dimensional model, push the object to the back of the three dimensional model, and/or the like. In such an example, it may be desirable to identify a particular object within the three dimensional model such that the user may interact with and/or manipulate the particular object. In at least one example embodiment, an apparatus designates an object that is comprised by the three dimensional model. For example, a user may indicate a desire to designate a particular object by way of identification of the object, selection of the object by way of a selection region, and/or the like. In such an example embodiment, the apparatus may determine a height in the three dimensional model and a width in the three dimensional model to correspond with a volumetric height of the object in the three dimensional model and a volumetric width of the object in the three dimensional model, respectively. For example, the object may have a predetermined volumetric height and a predetermined volumetric width prior to the determination of the height and the width. In such an example, the volumetric height may from the predetermined volumetric height, and the volumetric width may differ from the predetermined volumetric width. In this manner, the apparatus may cause resizing of the object such that a size of the object is characterized by the volumetric height and the volumetric width.

As the object is a three dimensional object within the three dimensional model, the object may be characterized by a volumetric height, a volumetric width, and a volumetric depth. In some circumstances, a user may desire to resize a particular object without affecting a positional depth of the object in the three dimensional model. For example, an object may have a predetermined volumetric depth prior to the receipt of information indicative of a non-depth multiple implement input, and determination of the height and the width based, at least in part, on the non-depth multiple implement input. In such an example, the apparatus may determine a changed volumetric depth of the object based, at least in part, on the non-depth multiple implement input. The changed volumetric depth of the object may be based, at least in part, on the volumetric height and the volumetric width of the object subsequent to resizing of the object to the volumetric height and the volumetric width. As such, the apparatus may scale the object such that the proportions associated with the predetermined volumetric height, the predetermined volumetric width, and the predetermined volumetric depth are maintained. For example, the object may have a predetermined positional depth in the three dimensional model prior to the determination of the height and the width, and the object may continue to have the predetermined positional depth in the three dimensional model subsequent to the determination of the height and the width. As such, the multiple implement input may fail to change the predetermined position depth of the object in the three dimensional model based, at least in part, on the multiple implement input being the non-depth multiple implement input. In such an example, the predetermined positional depth of the object may be a positional depth of the object in the three dimensional model that is relative to an object reference point of the object. The object reference point of the object may be a geometric center of the object, an edge of the object, a side of the object, a portion of the object, any other point of reference in relation to the object, and/or the like.

In order to facilitate user perception of interactions and manipulations that may be performed, it may be desirable to provide an updated representation of the three dimensional model such that the updated representation reflects the resizing of the object. In at least one example embodiment, a representation of a three dimensional model comprises a representation of an object. In such an example embodiment, the apparatus may cause display of another representation of the three dimensional model that comprises a different representation of the object such that the different representation of the object is indicative of the volumetric height and the volumetric width of the object. In such an example, the initial representation of the object in the representation of the three dimensional model may be indicative of the predetermined volumetric height and the predetermined volumetric width of the object in the three dimensional model prior to the resizing of the object. As such, the different representation of the object in the other representation of the three dimensional model allows a user of the apparatus to perceive the resizing of the object in the three dimensional model. In at least one example embodiment, the causation of display of the other representation of the three dimensional model is subsequent to the determination of the width in the three dimensional model and the height in the three dimensional model.

FIGURE 8A is a diagram illustrating a three dimensional model according to at least one example embodiment. The example of FIGURE 8A depicts three dimensional model 800. Three dimensional model 800 comprises object 802, object 804, object 806, and background 808. As can be seen, objects 802, 804, and 806 are located at various positions within three dimensional model 800. For example, object 802 is positioned at positional depth 812 within three dimensional model 800, object 804 is positioned at positional depth 814 within three dimensional model 800, and object 806 is positioned at positional depth 816 within three dimensional model 800. In the example of FIGURE 8A, background 808 is positioned behind objects 802, 804, and 806, at positional depth 818 within three dimensional model 800.

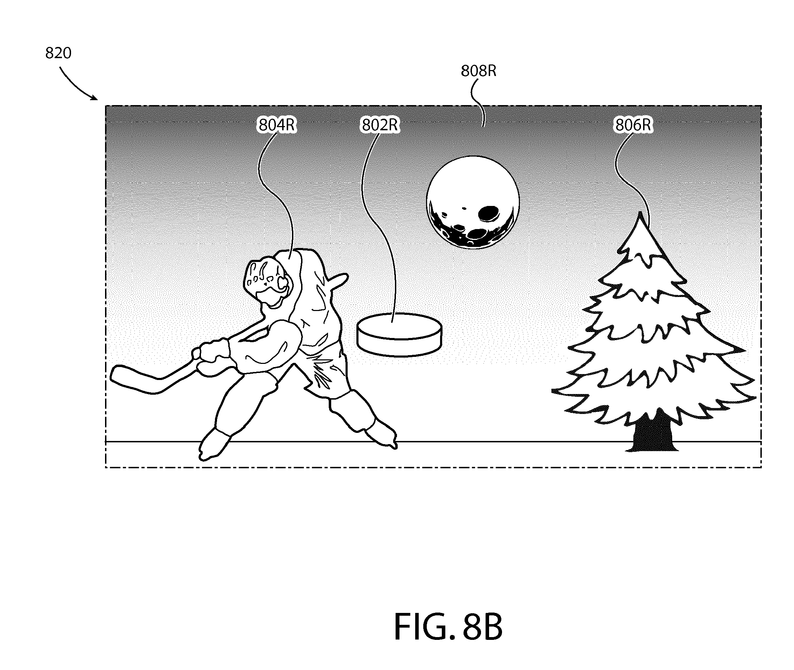

FIGURE 8B is a diagram illustrating a representation of a three dimensional model according to at least one example embodiment. The example of FIGURE 8B depicts representation 820. Representation 820 is a representation of three dimensional model 800 of FIGURE 8A. As can be seen, representation 820 comprises representations 802R, 804R, 806R, and 808R, which represent objects 802, 804, and 806, and background 808, of FIGURE 8A, respectively. As can be seen in the example of FIGURE 8A, object 802 is a hockey puck, object 804 is a hockey player, and object 806 is a tree. In the example of FIGURE 8A, objects 802, 804, and 806 are characterized by various volumetric heights, volumetric widths, and volumetric depths. As depicted in the example of FIGURE 8B, representations 802R, 804R, and 806R are represented in various sizes. In the example of FIGURE 8B, representation 802R, in relation to the volumetric size of object 802 of FIGURE 8A, may appear proportionally larger than representation 804R, in relation to the volumetric size of object 804 of FIGURE 8A, based, at least in part, on object 802 being positioned in front of object 804 within three dimensional model 800 of FIGURE 8A. As can be seen, representations 802R, 804R, and 806R obscure at least a portion of representation 808R, the representation of background 808 of FIGURE 8A. Such obscuration is based, at least in part, on objects 802, 804, and 806 being positioned at positional depths that are in front of the positional depth of background 808 in three dimensional model 800 of FIGURE 8A.

As stated previously, a user may desire to resize a particular object that is comprised by a three dimensional model. For example, the user may desire to make a particular object larger while avoiding modification of a positional depth of the particular object in the three dimensional model. For example, a user may desire to enlarge object 804 in three dimensional model 800 of FIGURE 8A.

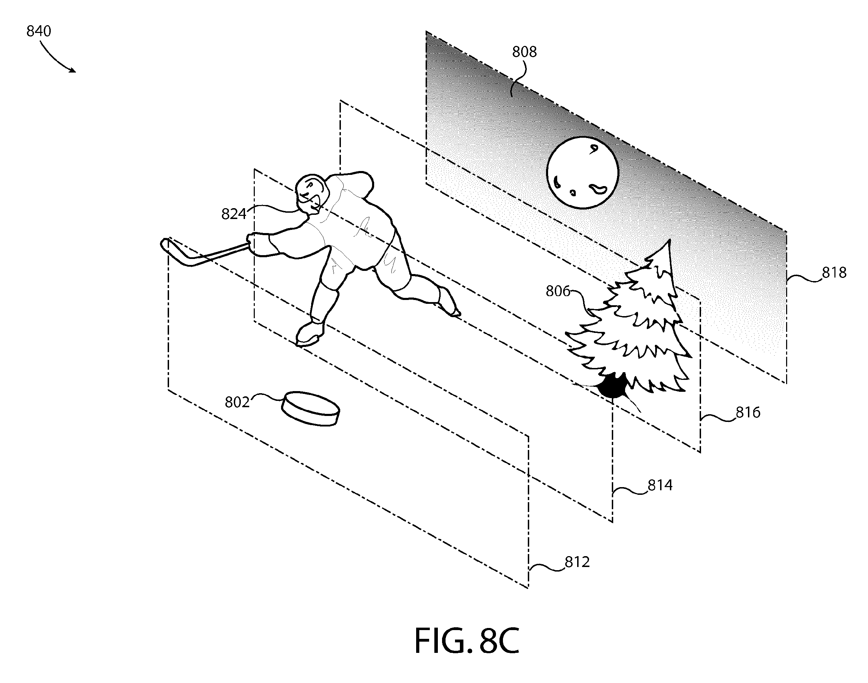

FIGURE 8C is a diagram illustrating a three dimensional model according to at least one example embodiment. The example of FIGURE 8C depicts three dimensional model 840, which corresponds with three dimensional model 800 of FIGURE 8A. As such, three dimensional model 840 comprises object 802, object 806, and background 808. As can be seen, three dimensional model 840 comprises object 824. In the example of FIGURE 8C, object 824 corresponds with an enlarged object 804 of FIGURE 8A. Object 824 is characterized by a volumetric height, a volumetric width, and a volumetric depth that was determined based, at least in part, on a non-depth multiple implement input that indicated a height, a width, and a depth. As can be seen, object 824 remains positioned at positional depth 814, which corresponds with the positional depth of object 804 in the example of FIGURE 8A. In this manner, resizing of object 804 of FIGURE 8A as depicted in three dimensional model 840 of FIGURE 8C failed to change the positional depth of object 804 based, at least in part, on the multiple implement input being a non-depth multiple implement input.

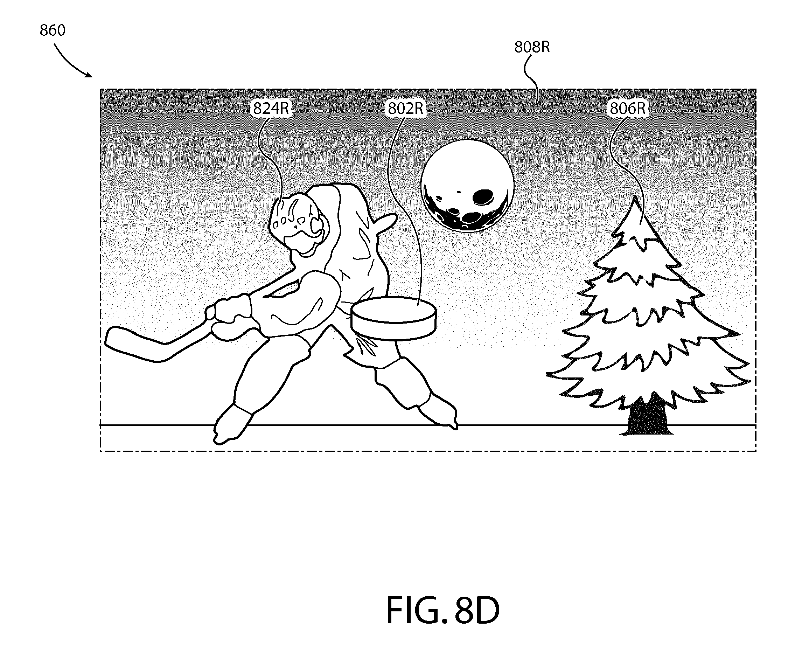

FIGURE 8D is a diagram illustrating a representation of a three dimensional model according to at least one example embodiment. The example of FIGURE 8D depicts representation 860. Representation 860 is a representation of three dimensional model 840 of FIGURE 8C. As can be seen, representation 860 comprises representations 802R, 806R, and 808R, which represent objects 802 and 806, and background 808, of FIGURE 8C, respectively. Representation 860 also comprises representation 824R, which represents object 824 of FIGURE 8C. In comparison with representation 804R of FIGURE 8B, representation 824R appears much larger, as representation 824R is characterized by a larger representational height and representational width based, at least in part, on the resizing of object 804 of FIGURE 8A to the size indicated by object 824 of FIGURE 8C. As can be seen, representations 802R, 824R, and 806R obscure at least a portion of representation 808R, the representation of background 808 of FIGURE 8C. Such obscuration is based, at least in part, on objects 802, 824, and 806 being positioned at positional depths that are in front of the positional depth of background 808 in three dimensional model 840 of FIGURE 8C. Additionally, subsequent to the resizing of object 824 of FIGURE 8C, representation 802R now obscures a portion of representation 824R. Such obscuration is based, at least in part, on object 802 being positioned at a positional depth that is in front of the positional depth of object 824 in three dimensional model 840 of FIGURE 8C.

FIGURES 9A-9B are diagrams illustrating a three dimensional model and/or a representation of a three dimensional model according to at least one example embodiment. The examples of FIGURES 9A-9B are merely examples and do not limit the scope of the claims. For example, three dimensional model configuration may vary, representations may vary, three dimensional model composition may vary, and/or the like.

As discussed previously, in many circumstances, a user may desire to interact with and/or manipulate an object that is comprised by a three dimensional model. For example, the user may desire to move the object within the three dimensional model, scale the object, resize the object, pull the object to the front of the three dimensional model, push the object to the back of the three dimensional model, and/or the like. In such an example, it may be desirable to identify a particular object within the three dimensional model such that the user may interact with and/or manipulate the particular object. In at least one example embodiment, an apparatus designates an object that is comprised by the three dimensional model. For example, a user may indicate a desire to designate a particular object by way of identification of the object, selection of the object by way of a selection region, and/or the like. In such an example embodiment, the apparatus may determine a height in the three dimensional model, a width in the three dimensional model, and a depth in the three dimensional model to correspond with a volumetric height of the object in the three dimensional model, a volumetric width of the object in the three dimensional model, and a volumetric depth of the object in the three dimensional model, respectively. For example, the object may have a predetermined volumetric height, a predetermined volumetric width, and a predetermined volumetric depth prior to the determination of the height, the width, and the depth. In such an example, the volumetric height may differ from the predetermined volumetric height, the volumetric width may differ from the predetermined volumetric width, and the volumetric depth may differ from the predetermined volumetric depth. In this manner, the apparatus may cause resizing of the object such that a size of the object is characterized by the volumetric height, the volumetric width, and the volumetric depth.

As the object is a three dimensional object within the three dimensional model, the object is characterized by a volumetric height, a volumetric width, and a volumetric depth. In some circumstances, a user may desire to resize a representation of a particular object by way of changing the positional depth of the object in the three dimensional model. For example, an object may have a predetermined volumetric depth prior to the receipt of information indicative of a depth multiple implement input. In such an example, a user may modify the positional depth of the object by way of the depth multiple implement input. For example, the apparatus may determine a height, a width, and a depth based, at least in part, on the depth multiple implement input. The height may correspond with a changed representational height of the representation of the object in the representation of the three dimensional model, the width may correspond with a changed representational width of the representation of the object in the representation of the three dimensional model, and the depth may correspond with a changed positional depth of the object in the three dimensional model. As such, bringing the object forward within the three dimensional model may result in an increased representational height and representational width in the representation of the three dimensional model. Conversely, pushing the object back within the three dimensional model may result in a decreased representational height and representational width in the representation of the three dimensional model. In this manner, the representational height and the representational width of the object in the representation of the three dimensional model may be based, at least in part, on the positional depth of the object within the three dimensional model. For example, an object that is towards the front of the three dimensional model may be closer to a vantage point of the representation of the three dimensional model and, thus, appear larger in relation to the representation of the three dimensional model. In another example, an object that is towards the back of the three dimensional model may be further from the vantage point of the representation of the three dimensional model and, thus, appear smaller in relation to the representation of the three dimensional model.

In order to facilitate user perception of interactions and manipulations that may be performed, it may be desirable to provide an updated representation of the three dimensional model such that the updated representation reflects the repositioning of the object to the changed positional depth. In at least one example embodiment, a representation of a three dimensional model comprises a representation of an object. In such an example embodiment, the apparatus may cause display of another representation of the three dimensional model that comprises a different representation of the object such that the different representation of the object is indicative of the changed positional depth of the object in the three dimensional model. In such an example, the initial representation of the object in the representation of the three dimensional model may be indicative of the predetermined volumetric depth in the three dimensional model prior to the repositioning of the object. As such, the different representation of the object in the other representation of the three dimensional model allows a user of the apparatus to perceive the repositioning of the object to the changed positional depth within the three dimensional model. In at least one example embodiment, the causation of display of the other representation of the three dimensional model is subsequent to the determination of the width in the three dimensional model, the height in the three dimensional model, and the depth in the three dimensional model.

For example, the representation of the object may have a representational height, a representational width, and a representational depth prior to the determination of the height, the width, and the depth. In such an example, the apparatus may determine a changed representational height, a changed representational width, and a changed representational depth based, at least in part, on the depth multiple implement input. In such an example, the different representation of the object may be indicative of the changed representational height, the changed representational width, and the changed representational depth. In another example, the representation of the object may have a representational height in the representation of the three dimensional model and a representational width in the representation of the three dimensional model prior to the determination of the height, the width, and the depth. In such an example, the apparatus may determine a changed representational height and a changed representational width based, at least in part, on the depth multiple implement input. In such an example, the different representation of the object may be indicative of the changed representational height and the changed representational width.

As discussed previously, a user may desire to change the positional depth of one or more objects within a three dimensional model by way of a depth multiple implement input. In at least one example embodiment, a multiple implement input changes the predetermined positional depth of the object in the three dimensional model based, at least in part, on the multiple implement input being a depth multiple implement input. The changed positional depth of the object in the three dimensional model may be based, at least in part, on the depth multiple implement input. In some circumstances, subsequent to changing of the positional depth of the object to a changed positional depth, the user may desire to again modify the changed positional depth via pushing the object further to the back of the three dimensional model, bringing the object closer to the front of the three dimensional model, and/or the like. In such circumstances, the user may continue to reposition the object within the three dimensional model by way of the depth multiple implement input, another depth multiple implement input, and/or the like. In at least one example embodiment, an apparatus determines that the depth multiple implement input comprises a movement input that indicates a change in distance between at least two of the implements, and determines a changed volumetric height, a changed volumetric width, and a changed volumetric depth based, at least in part, on the change in the distance. In such an example embodiment, the apparatus may determine another changed positional depth of the object in the three dimensional model based, at least in part, on the movement input of the depth multiple implement input.

In at least one example embodiment, an apparatus determines that the depth multiple implement input comprises a movement input that indicates a change in distance between at least two of the implements. In such an example embodiment, the determination of the changed second positional depth may be based, at least in part, on the change in the distance. In such an example embodiment, the changed volumetric height and the changed volumetric depth may be based, at least in part, on the changed positional depth, as discussed previously. In such an example embodiment, the object may have a predetermined volumetric depth prior to the determination of the height, the width, and the depth, and the object continues to have the predetermined volumetric depth subsequent to the determination of the height, the width, and the depth. Similarly, the object may have a predetermined volumetric width, a predetermined volumetric height, and a predetermined volumetric depth prior to the determination of the height, the width, and the depth, and the object may continue to have the predetermined volumetric width, the predetermined volumetric height, and the predetermined volumetric depth subsequent to the determination of the height, the width, and the depth. For example, the repositioning of the object from the predetermined positional depth to the changed positional depth fails to modify the volumetric height of the model, the volumetric width of the object, and/or the volumetric depth of the model. In such an example, the repositioning of the object fails to resize the object. In such an example, the change in the representational size of the object in the representation of the three dimensional model may be based, at least in part, on the changed positional depth of the object in the three dimensional model.

FIGURE 9A is a diagram illustrating a three dimensional model according to at least one example embodiment. The example of FIGURE 9A depicts three dimensional model 900. Three dimensional model 900 corresponds with three dimensional model 800 of FIGURE 8A subsequent to the repositioning of object 804 of FIGURE 8A to the position indicated by object 914 of FIGURE 9A. Three dimensional model 900 comprises object 802, object 914, object 806, and background 808. As can be seen, objects 802, 914, and 806 are located at various positions within three dimensional model 900. For example, object 802 is positioned at positional depth 812 within three dimensional model 900 and object 806 is positioned at positional depth 816 within three dimensional model 900. In the example of FIGURE 9A, background 808 is positioned behind objects 802, 914, and 806, at positional depth 818 within three dimensional model 900.

Object 914 corresponds with object 804 of FIGURE 8A prior to repositioning of object 804 from positional depth 814 to positional depth 816. In the example of FIGURE 9A, object 914 was repositioned from positional depth 814 to positional depth 816 by way of a depth multiple implement input that indicated a user's desire to reposition object 804 of FIGURE 8A from its predetermined positional depth of positional depth 814 to the changed positional depth of positional depth 816. As can be seen, object 914 is now further to the back of three dimensional model 900, and is now at the same positional depth as object 806.

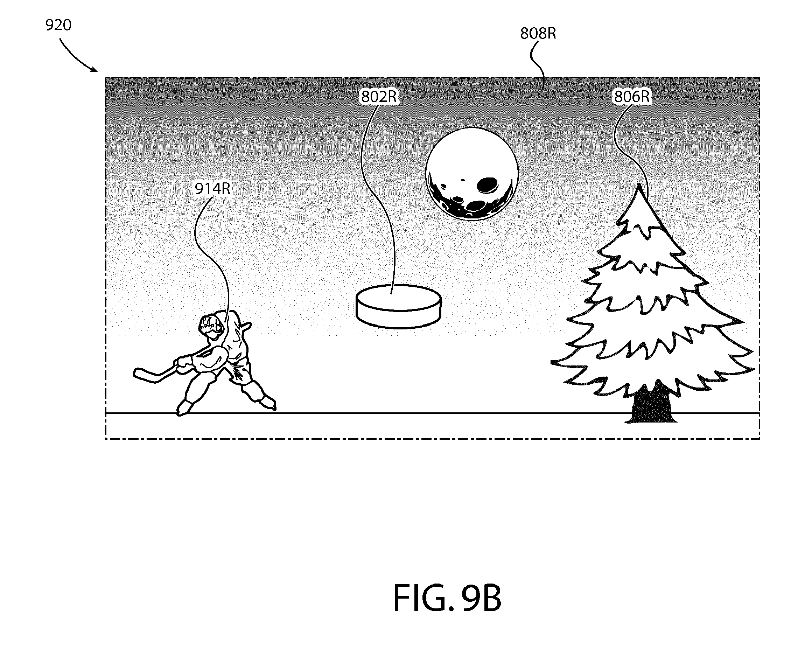

FIGURE 9B is a diagram illustrating a representation of a three dimensional model according to at least one example embodiment. The example of FIGURE 9B depicts representation 920. Representation 920 is a representation of three dimensional model 900 of FIGURE 9A. As can be seen, representation 920 comprises representations 802R, 914R, 806R, and 808R, which represent objects 802, 914, and 806, and background 808, of FIGURE 9A, respectively. As can be seen in the example of FIGURE 9B, in comparison to representation 804R of FIGURE 8B, representation 914R, the representation of the hockey player, appears much smaller than the representation of the hockey player in representation 820 of FIGURE 8B. Such a reduction in the representational height and representational width of representation 914R may be based, at least in part, on the change in the positional depth of object 914 from positional depth 814 to positional depth 816. From the vantage point of representation 920 of three dimensional model 900 of FIGURE 9A, object 914 is further away in comparison with object 804 of FIGURE 8A, and thus appears smaller due, at least in part, to the increase in the distance from the front of three dimensional model 900 of FIGURE 9A.

Although the selection of objects and the manipulation, resizing, and/or repositioning of objects are discussed independently, the two interactions may be combined in any arrangement and in any order. For example, a user may select one or more objects comprised by a three dimensional model by way of a multiple implement input, such as a non-depth multiple implement input, a depth multiple implement input, and/or the like. Subsequently, the user may manipulate, resize, and/or reposition the selected objects by way of another multiple implement input, such as a non-depth multiple implement input, a depth multiple implement input, and/or the like. Additionally, it may be desirable to associate a particular action with a particular number of implements. For example, a non-depth multiple implement input associated with selection of an object may be associated with two implements, a depth multiple implement input associated with selection of an object may be associated with three implements, a non-depth multiple implement input associated with resizing of an object may be associated with four implements, a depth multiple implement input associated with resizing of an object may be associated with five implements, and/or the like.

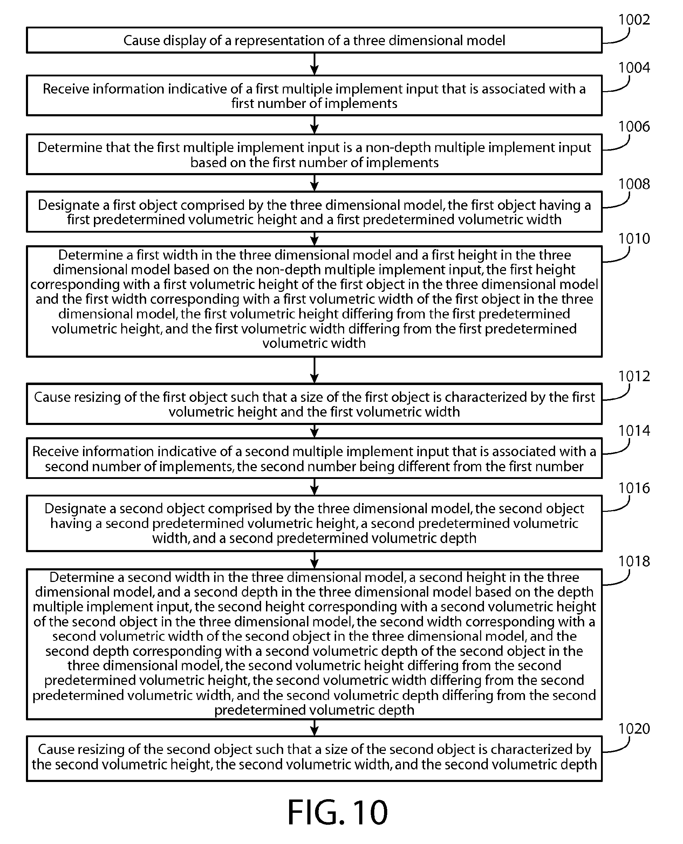

FIGURE 10 is a flow diagram illustrating activities associated with resizing of an object according to at least one example embodiment. In at least one example embodiment, there is a set of operations that corresponds with the activities of FIGURE 10. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 10.

As discussed previously, in many circumstances, a user may desire to resize an object in a three dimensional model and/or reposition an object within the three dimensional model. As such, it may be desirable to configure an apparatus such that a user may resize an object in a three dimensional model and/or reposition an object within the three dimensional model by way of one or more multiple implement inputs.

At block 1002, the apparatus causes display of a representation of a three dimensional model. The causation of display, the three dimensional model, and the representation of the three dimensional model may be similar as described regarding FIGURES 3A-3D, FIGURES 4A-4B, FIGURES 8A-8D, and FIGURES 9A-9B.

At block 1004, the apparatus receives information indicative of a first multiple implement input that is associated with a first number of implements. The receipt, the first multiple implement input, and the first number of implements may be similar as described regarding FIGURES 2A-2D, FIGURES 3A-3D, and FIGURES 8A-8D.

At block 1006, the apparatus determines that the first multiple implement input is a non-depth multiple implement input based, at least in part, on the first number of implements. The determination and the non-depth multiple implement input may be similar as described regarding FIGURES 2A-2D, FIGURES 3A-3D, and FIGURES 8A-8D.

At block 1008, the apparatus designates a first object comprised by the three dimensional model, the first object having a first predetermined volumetric height and a first predetermined volumetric width. The designation, the first object, the first predetermined volumetric height, and the first predetermined volumetric width may be similar as described regarding FIGURES 8A-8D and FIGURES 9A-9B.

At block 1010, the apparatus determines a first width in the three dimensional model and a first height in the three dimensional model based, at least in part, on the non-depth multiple implement input. In such an example embodiment, the first height corresponds with a first volumetric height of the first object in the three dimensional model and the first width corresponds with a first volumetric width of the first object in the three dimensional model. In such an example embodiment, the first volumetric height differs from the first predetermined volumetric height, and the first volumetric width differs from the first predetermined volumetric width. The determination, the first width, the first height, the first volumetric width, and the first volumetric height may be similar as described regarding FIGURES 8A-8D and FIGURES 9A-9B.

At block 1012, the apparatus causes resizing of the first object such that a size of the first object is characterized by the first volumetric height and the first volumetric width. The causation of resizing and the size of the first object may be similar as described regarding FIGURES 8A-8D and FIGURES 9A-9B.

At block 1014, the apparatus receives information indicative of a second multiple implement input that is associated with a second number of implements, the second number being different from the first number. The receipt, the second multiple implement input, and the second number of implements may be similar as described regarding FIGURES 2A-2D, FIGURES 4A-4B, and FIGURES 9A-9B.

At block 1016, the apparatus designates a second object comprised by the three dimensional model. In such an example embodiment, the second object has a second predetermined volumetric height, a second predetermined volumetric width, and a second predetermined volumetric depth. The designation, the second object, the second predetermined volumetric height, the second predetermined volumetric width, and the second predetermined volumetric depth may be similar as described regarding FIGURES 2A-2D, FIGURES 4A-4B, and FIGURES 9A-9B.

At block 1018, the apparatus determines a second width in the three dimensional model, a second height in the three dimensional model, and a second depth in the three dimensional model based, at least in part, on the depth multiple implement input. In such an example embodiment, the second height corresponds with a second volumetric height of the second object in the three dimensional model, the second width corresponds with a second volumetric width of the second object in the three dimensional model, and the second depth corresponds with a second volumetric depth of the second object in the three dimensional model. In such an example embodiment, the second volumetric height differs from the second predetermined volumetric height, the second volumetric width differs from the second predetermined volumetric width, and the second volumetric depth differs from the second predetermined volumetric depth. The determination, the second width, the second height, the second depth, the second volumetric height, the second volumetric width, and the second volumetric depth may be similar as described regarding FIGURES 4A-4B and FIGURES 9A-9B.

At block 1020, the apparatus causes resizing of the second object such that a size of the second object is characterized by the second volumetric height, the second volumetric width, and the second volumetric depth. The causation of resizing and the size of the second object may be similar as described regarding FIGURES 4A-4B and FIGURES 9A-9B.

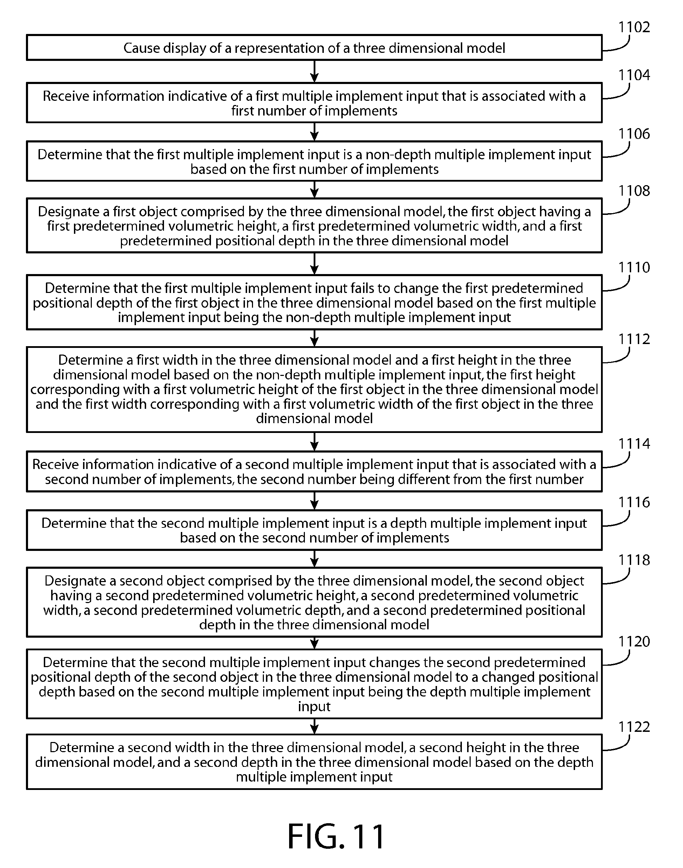

FIGURE 11 is a flow diagram illustrating activities associated with determination of a width, a height, and/or a depth in a three dimensional model according to at least one example embodiment. In at least one example embodiment, there is a set of operations that corresponds with the activities of FIGURE 11. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 11.

As discussed previously, in many circumstances, it may be desirable to allow a user to resize an object without changing a positional depth of the object in a three dimensional model by way of a non-depth multiple implement input. Similarly, in many circumstances, the user may desire to reposition an object from a positional depth to a different positional depth in a three dimensional model by way of a depth multiple implement input. As such, it may be desirable to configure an apparatus such that a user of the apparatus may selectively manipulate the positional depth of an object by way of multiple implement inputs.

At block 1102, the apparatus causes display of a representation of a three dimensional model. The causation of display, the three dimensional model, and the representation of the three dimensional model may be similar as described regarding FIGURES 3A-3D, FIGURES 4A-4B, FIGURES 8A-8D, and FIGURES 9A-9B.

At block 1104, the apparatus receives information indicative of a first multiple implement input that is associated with a first number of implements. The receipt, the first multiple implement input, and the first number of implements may be similar as described regarding FIGURES 2A-2D, FIGURES 3A-3D, and FIGURES 8A-8D.

At block 1106, the apparatus determines that the first multiple implement input is a non-depth multiple implement input based, at least in part, on the first number of implements. The determination and the non-depth multiple implement input may be similar as described regarding FIGURES 2A-2D, FIGURES 3A-3D, and FIGURES 8A-8D.

At block 1108, the apparatus designates a first object comprised by the three dimensional model. In such an example embodiment, the first object has a first predetermined volumetric height, a first predetermined volumetric width, and a first predetermined positional depth in the three dimensional model. The designation, the first object, the first predetermined volumetric height, the first predetermined volumetric width, and the first predetermined positional depth may be similar as described regarding FIGURES 3A-3D, FIGURES 4A-4B, FIGURES 8A-8D, and FIGURES 9A-9B.

At block 1110, the apparatus determines that the first multiple implement input fails to change the first predetermined positional depth of the first object in the three dimensional model based, at least in part, on the first multiple implement input being the non-depth multiple implement input. The determination and the failure to change the first predetermined positional depth of the first object may be similar as described regarding FIGURES 3A-3D, FIGURES 4A-4B, FIGURES 8A-8D, and FIGURES 9A-9B.

At block 1112, the apparatus determines a first width in the three dimensional model and a first height in the three dimensional model based, at least in part, on the non-depth multiple implement input. In such an example embodiment, the first height correspond with a first volumetric height of the first object in the three dimensional model and the first width correspond with a first volumetric width of the first object in the three dimensional model. The determination, the first width, the first height, the first volumetric height, and the first volumetric width may be similar as described regarding FIGURES 3A-3D, FIGURES 4A-4B, FIGURES 8A-8D, and FIGURES 9A-9B.

At block 1114, the apparatus receives information indicative of a second multiple implement input that is associated with a second number of implements, the second number being different from the first number. The receipt, the second multiple implement input, and the second number of implements may be similar as described regarding FIGURES 2A-2D, FIGURES 4A-4B, and FIGURES 9A-9B.

At block 1116, the apparatus determines that the second multiple implement input is a depth multiple implement input based, at least in part, on the second number of implements. The determination and the depth multiple implement input may be similar as described regarding FIGURES 2A-2D, FIGURES 4A-4B, and FIGURES 9A-9B.

At block 1118, the apparatus designates a second object comprised by the three dimensional model. In such an example embodiment, the second object has a second predetermined volumetric height, a second predetermined volumetric width, a second predetermined volumetric depth, and a second predetermined positional depth in the three dimensional model. The designation, the second object, the second predetermined volumetric height, the second predetermined volumetric width, the second predetermined volumetric depth, and the second predetermined positional depth may be similar as described regarding FIGURES 2A-2D, FIGURES 4A-4B, and FIGURES 9A-9B.

At block 1120, the apparatus determines that the second multiple implement input changes the second predetermined positional depth of the second object in the three dimensional model to a changed positional depth based, at least in part, on the second multiple implement input being the depth multiple implement input. The determination and the changed positional depth may be similar as described regarding FIGURES 2A-2D, FIGURES 4A-4B, and FIGURES 9A-9B.

At block 1122, the apparatus determines a second width in the three dimensional model, a second height in the three dimensional model, and a second depth in the three dimensional model based, at least in part, on the depth multiple implement input. The determination, the second width, the second height, and the second depth may be similar as described regarding FIGURES 2A-2D, FIGURES 4A-4B, and FIGURES 9A-9B.

Embodiments of the invention may be implemented in software, hardware, application logic or a combination of software, hardware, and application logic. The software, application logic and/or hardware may reside on the apparatus, a separate device, or a plurality of separate devices. If desired, part of the software, application logic and/or hardware may reside on the apparatus, part of the software, application logic and/or hardware may reside on a separate device, and part of the software, application logic and/or hardware may reside on a plurality of separate devices. In an example embodiment, the application logic, software or an instruction set is maintained on any one of various conventional computer-readable media.

If desired, the different functions discussed herein may be performed in a different order and/or concurrently with each other. For example, blocks 504, 506, and 508 of FIGURE 5 may be performed after block 514 of FIGURE 5. Furthermore, if desired, one or more of the above-described functions may be optional or may be combined. For example, block 610 of FIGURE 6 may be optional and/or combined with block 608 of FIGURE 6.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are variations and modifications which may be made without departing from the scope of the present invention as defined in the appended claims.

## Claims

1. An method, comprising:
causing display of a representation of a three dimensional model;
receiving information indicative of a first multiple implement input that is associated with a first number of implements;
determining that the first multiple implement input is a non-depth multiple implement input based, at least in part, on the first number of implements;
determining a first width in the three dimensional model and a first height in the three dimensional model based, at least in part, on the non-depth multiple implement input;
receiving information indicative of a second multiple implement input that is associated with a second number of implements, the second number being different from the first number;
determining that the second multiple implement input is a depth multiple implement input based, at least in part on the second number of implements; and
determining a second width in the three dimensional model, a second height in the three dimensional model, and a second depth in the three dimensional model based, at least in part, on the depth multiple implement input.

2. The method of Claim 1, further comprising determining a first positional depth in the three dimensional model to associate with the non-depth multiple implement input.

3. The method of Claim 2, further comprising determining a selection region that has a position that corresponds with the first positional depth and has a selection region size that corresponds with a first volumetric width and a first volumetric height such that the first volumetric width corresponds with the first width and the first volumetric height corresponds with the first height.

4. The method of Claim 3, further comprising:
determining that the position of the first object corresponds with the selection region; and
causing selection of the first object based, at least in part, on the position of the first object corresponding with the selection region.

5. The method of any of Claims 1-4, further comprising determining a second positional depth in the three dimensional model to associate with the depth multiple implement input.

6. The method of Claim 5, further comprising determining a selection region that has a position that corresponds with the second positional depth and has a selection region size that corresponds with a second volumetric width, a second volumetric height, and a second volumetric depth, such that the second volumetric width corresponds with the second width, the second volumetric height corresponds with the second height, and the second volumetric depth corresponds with the second depth.

7. The method of Claim 6, further comprising:
determining that the position of the first object corresponds with the selection region; and
causing selection of the first object based, at least in part, on the position of the first object corresponding with the selection region.

8. The method of Claim 1, further comprising designating an object comprised by the three dimensional model, wherein the first height corresponds with a volumetric height of the object in the three dimensional model and the first width corresponds with a volumetric width of the object in the three dimensional model.

9. The method of Claim 8, wherein the object has a predetermined volumetric height and a predetermined volumetric width prior to the determination of the first height and the first width, the volumetric height differs from the predetermined volumetric height, and the volumetric width differs from the predetermined volumetric width.

10. The method of Claim 1, further comprising designating an object comprised by the three dimensional model, wherein the second height corresponds with a volumetric height of the object in the three dimensional model, the second width corresponds with a volumetric width of the object in the three dimensional model, and the second depth corresponds with a volumetric depth of the object in the three dimensional model.

11. The method of Claim 10, wherein the object has a predetermined volumetric height, a predetermined volumetric width, and a predetermined volumetric depth prior to the determination of the second height, the second width, and the second depth, the volumetric height differs from the predetermined volumetric height, the volumetric width differs from the predetermined volumetric width, and the volumetric depth differs from the predetermined volumetric depth.

12. The method of any of Claims 10-11, wherein the representation of the three dimensional model comprises a representation of the object, and further comprising causing display of another representation of the three dimensional model that comprises a different representation of the object such that the different representation of the object is indicative of the volumetric height, the volumetric width, and the volumetric width.

13. An apparatus comprising means for performing the method of any of the preceding claims.

14. The apparatus of Claim 13, wherein the means for performing the method comprise at least one processor and at least one memory, the memory comprising machine-readable instructions, that when executed cause the apparatus to perform the method of any of claims 1-12.

15. At least one computer readable medium comprising instructions that, when executed, perform the method of any of claims 1-12.
